(19) Europäisches Patentamt / European Patent Office / Office européen des brevets

(11) **EP 4 362 525 B1**

(12) **EUROPEAN PATENT SPECIFICATION**

(45) Date of publication and mention of the grant of the patent:
**12.02.2025 Bulletin 2025/07**

(21) Application number: **22204374.7**

(22) Date of filing: **28.10.2022**

(51) International Patent Classification (IPC):
**H04W 16/18** (2009.01)      **G06N 10/00** (2022.01)

(52) Cooperative Patent Classification (CPC):
**H04W 16/18; G06N 10/60**

(54) **COMPUTER-IMPLEMENTED METHOD FOR OPTIMIZING SIGNAL RECEPTION IN A COMMUNICATIONS NETWORK SUITABLE FOR A QUANTUM CONCEPT PROCESSOR**

COMPUTERIMPLEMENTIERTES VERFAHREN ZUR OPTIMIERUNG DES SIGNALEMPFANGS IN EINEM KOMMUNIKATIONSNETZ, DAS FÜR EINEN QUANTENKONZEPTPROZESSOR GEEIGNET IST

PROCÉDÉ MIS EN UVRE PAR ORDINATEUR POUR OPTIMISER LA RÉCEPTION DE SIGNAL DANS UN RÉSEAU DE COMMUNICATION APPROPRIÉ POUR UN PROCESSEUR DE CONCEPT QUANTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**01.05.2024 Bulletin 2024/18**

(73) Proprietors:
- **Fujitsu Germany GmbH**
  **80807 München (DE)**
- **Deutsche Telekom AG**
  **53113 Bonn (DE)**

(72) Inventors:
- **Geitz, Marc**
  **58089 Hagen (DE)**
- **Holschke, Oliver**
  **10969 Berlin (DE)**
- **Crisan, Christine**
  **53229 Bonn (DE)**
- **Yin, Ming**
  **16341 Panketal (DE)**
- **Münch, Christian**
  **80807 München (DE)**
- **Schinkel, Fritz**
  **80807 München (DE)**
- **Awasthi, Abhishek**
  **80807 München (DE)**

(74) Representative: **Epping - Hermann - Fischer Patentanwaltsgesellschaft mbH Schloßschmidstraße 5 80639 München (DE)**

(56) References cited:
CN-A- 113 766 518      US-A1- 2005 097 161
US-B1- 6 470 195

**EP 4 362 525 B1**

**Description**

The present disclosure relates to the field of computer based planning and optimization of communication networks. In particular, it relates to a computer-implemented method for optimizing signal reception in a communications network with a plurality of radio cells, a quantum concept processor and a computer program.

The proper placement of base station antennas of a communication network is important for its service quality in terms of total coverage and expected data rates for mobile terminals. As disclosed, for example, in 3GPP TR 36.942, base stations with three three-sector antennas per site can be placed on a hexagonal grid with a distance of 3*R, where R is the cell radius. However, such a regular placement is only possible in absence of obstacles and other constraints.

Finding a suitable location for a new base station site and a corresponding configuration of antennas associated therewith becomes more complicated when the location cannot be freely chosen, for example due to land ownership and access issues, or when physical obstacles, such as mountains or buildings, affect radio signal propagation.

Moreover, in case a communication network comprising a number of pre-existing, i.e. already installed, radio cells is to be upgraded in terms of coverage or expected data rates by the addition of new radio cells, the locations of antennas corresponding to the pre-existing radio cells need to be considered.

CN 113766518 A provides a base station antenna selection and broadcast beam planning method and device. The method comprises the steps of building a ray projection grid model for each cell in a simulation region according to a three-dimensional map, a station location and antenna height calibrated on the three-dimensional map, and three-dimensional building information in the three-dimensional map; performing grid degeneration on the ray projection grid model of each cell in the simulation area based on various broadcast beam configurations corresponding to the candidate antennas; calculating cost functions corresponding to various grid degeneracy modes, and selecting a candidate antenna corresponding to the grid degeneracy mode with the maximum cost function gain as a selected antenna; and bringing the various broadcast beam configurations corresponding to the selected antenna into the system-level simulation platform for simulation verification to obtain the optimal broadcast beam configuration of each base station in the simulation area. Influence factors such as the site, the antenna height and three-dimensional building information are considered, and automatic optimization of related parameters of antenna selection and broadcast beam configuration is realized.

US 2005/097161 A1 provides a system and method for performing a network planning and mobility management optimization, which includes a graphical user interface (GUI) front-end for allowing users to operate required procedures for network planning and mobility management optimization. The network plan takes a network topology (NT) and its associated network statistic data as input. Accordingly, a network plan can represent an arrangement of network elements which display a superior-subordinate relationship between network elements in the mobile communication network.

US 6,470,195 B1 discloses that a network planning tool (NPT) computer program is used to model characteristics of a wireless telephone network. The network contains a plurality of cells which each include a plurality of sectors disposed about a base station that has a respective antenna for each sector. Techniques are provided for modeling smart antennas, including use of a switched-beam transmit and receive patterns with approximately random allocation among the beams of frequencies assigned to an associated sector. In the case of an adaptive beam-forming smart antenna, power levels for that antenna and a remote antenna operating at the same frequency are adjusted so as to increase a differential therebetween by an improvement value associated with the smart antenna. Potential uplink interference at a given base station is modeled by simulating operation of other base stations at an uplink frequency with a reduced power level. Potential interfering signals are discounted to the extent a smart antenna can intelligently reject a limited number of undesired signals.

Current optimization methods employ a topographical model that allows to estimate an expected signal strength of a signal, which is transmitted by a base station antenna placed at a candidate site and having a specific antenna orientation, and which is received by a terminal at a given location within the service area. In addition to the signal strength, a signal disturbance caused by other base station antennas needs to be estimated. In order to achieve a reasonable coverage with an acceptable interference level across the service area, these estimations need to be repeated for many locations, referred to as "pixels" in this context, and for many or all possible subsets of candidate sites and possible antenna orientations. This in turn leads to a great number of potential combinations to be considered, making this approach computationally very expensive, thereby greatly limiting the number of candidate sites, antenna configurations and/or pixel that can be considered.

In view of the above, there is a need for improved or alternative methods and systems for optimizing signal reception in a cell-based communications network.

The present invention is defined by the attached set of claims. Further details of the disclosed methods, devices and system are provided in the following, which are helpful for understanding the claimed invention.

According to a first aspect, a computer-implemented method for optimizing signal reception in a cellular communications network with a plurality of antennas for communicating with terminals is provided. The method comprising the following steps: specifying a set $S$ of candidate sites s and a set $D$ of candidate antenna configurations, CAC, for placement of one or more antennas at the candidate sites $s$; specifying a set $P$ of pixels $p$, each pixel $p$

2

corresponding to a geographic location within a service area for which signal reception should be optimized; selecting a set $B_p$ of candidate best servers, CBS, for each pixel $p$ based on an expected radio signal strength for a terminal at the geographic location corresponding to the respective pixel $p$, each set $B_p$ comprising zero or more candidate servers corresponding to one of the candidate sites $s$ and one of the CAC; and determining a set of proposed servers. The determination is based at least on: an optimized aggregated signal-to-noise ratio, SNR, computed for all pixels $p$ in case all of the proposed servers of the set are built at the corresponding candidate sites s with the corresponding CAC, and a first restriction requiring that, from each set $B_p$ of CBS, at most a single CBS is included in the set of proposed servers.

Among others, the inventors have found that a determination of proposed or to-be-built servers, e.g. antennas to be placed at a potential site for a new base station and with a given configuration to cover a corresponding new cell of the communications network, can be greatly simplified, if, in a first step, a set of candidate best servers is selected for each pixel based on an expected radio signal strength, and, in a second step, at most a single candidate best server from each such set is included in the set of proposed servers.

The above preselection and additional constraint achieve a good coverage and signal quality and, at the same time, simplify the optimization of the network. Among others, this is based on the insight that only sites with a good expected radio signal strength, e.g. nearby candidate sites, need to be considered to achieve a satisfactory coverage and signal quality for a given pixel. At the same time, any such site will be sufficient to provide a desired coverage and signal quality, whereas further servers in the same radio environment will add significant interference. Thus, once a particular candidate best server is considered for one pixel, it can be safely assumed that other candidate best servers for the same pixel should not be selected, greatly reducing the number of potential configurations to be considered in a numerical optimization procedure.

This approach also has the advantage that a best server for each pixel $p$ can already be decided by the choice of a candidate best server from the set $B_p$ of candidate best servers, which simplifies the optimization as no further computation and/or decision variable is necessary to determine the best server of each pixel within a chosen set of candidate sites with corresponding antenna configuration.

In at least one implementation, the communication network comprises a set of pre-existing antennas, each pre-existing antenna installed at a fixed site sf and having a fixed antenna configuration. The method further comprises identifying a best fixed antenna, BFA, for each pixel $p$, wherein the BFA corresponds to the antenna of the set of pre-existing antennas providing the highest expected radio signal strength at the geographic location corresponding to the respective pixel $p$. The step of selecting the set $B_p$ of CBS for each pixel $p$, comprises selecting candidate servers complying with a predefined second coverage criterion with respect to the BFA for the corresponding pixel $p$ as CBS. In this way, pre-existing antennas located in proximity to a pixel, thus having a high expected radio signal strength can be considered in the optimization procedure, while at the same time further limiting the number of candidate best serves in the set $B_p$ of candidate best servers of the pixel $p$.

In at least one implementation, only candidate servers providing a better DLR than the BFA for the corresponding pixel $p$ are selected as CBS, wherein DLR indicates a downlink reference value for the respective candidate server. The restriction enforces that only candidate sites with CAC for which the best server antenna exceeds the highest expected radio signal strength of the BFA can be selected into the set $B_p$ of CBS. Among others, this ensures that the selected CBS from $B_p$ are not dominated by the pre-existing fixed antenna.

The above features are particularly useful in cases where an existing network should be improved, e.g. to improve coverage or data rates, by adding one or more further cells into an existing network of radio cells. In principal, this is a very demanding task, as the interference caused by existing radio cells as well as any new proposed servers needs to be considered when selecting any new sites and their antenna configurations.

In at least one implementation, the set $D$ of CAC for a candidate site $s$ is characterized by at least one of the following: a number $N_a$ of antennas to be installed at the candidate site $s$; a horizontal mounting angle $d$ of at least one first antenna ($A_0$) to be installed at the candidate site $s$; a vertical mounting angle of at least one antenna to be installed at the candidate site $s$; and/or a mounting height of at least one antenna to be installed at the candidate site $s$. This allows to represent similar antenna configurations in an efficient manner in the computer-implemented optimization procedure, while preserving their physical characteristics.

For example, the number $N_a$ of antennas is fixed for all candidate sites $s$ of the set $S$, in particular to $N_a = 3$, and the horizontal mounting angle $d$ is used to indicate an orientation $d_a$ of $N_a$ equally spaced sector antennas to be installed at the candidate site $s$, in particular $d_a = 360/N_a \cdot a + d$, with $a \in \{0,...,N, - 1\}$. This means that indication of a single reference angle $d$ per candidate site $s$ is sufficient to determine the configuration of all possible antennas to be installed.

The inventors have also found several ways to map the task of optimizing signal reception in a network as detailed above to a quadratic unconstrained binary optimization, QUBO, function, both with and without the above preselection and constraints. Reformulating the above task as a QUBO enables its execution on a quantum concept computer, which can very quickly evaluate a large number of possible system configurations. In the QUBO system, binary decision variables may correspond to potential sites, antenna configurations and/or best servers for a pixel, which can be used to define a Hamiltonian comprising polynomial terms expressing an optimization goal and any desired constraints of the optimized system. In this way, digital annealing methods may be employed to find an optimal or near optimal configuration for the communication network.

Accordingly, according to the claims, the step of determining the set of proposed servers comprises: providing a quadratic unconstrained binary optimization, QUBO, function, in particular a Hamiltonian, comprising at least a first polynomial term $H_{SNR}$ and a second polynomial term $H_{one\_best\_server}$, the first polynomial term $H_{SNR}$ expressing an objective function indicative of the aggregated SNR computed for each pixel $p$, and the second polynomial term $H_{one\_best\_server}$ expressing a first constraint based on the first restriction; and optimizing the QUBO function using a quantum concept processor, QCP, to determine the set of proposed servers.

In at least one implementation, the QUBO function further comprises a third polynomial term $H_{allowed\_degrees}$ expressing a second constraint requiring that, for each candidate site $s$, only a single, common antenna configuration is included in the set of proposed servers.

In at least one implementation, the QUBO function further comprises a fourth polynomial term $H_{number\_sites}$ expressing a third constraint requiring that a predetermined number $S_{num}$ of sites and/or servers is included in the set of proposed servers.

In at least one implementation, the QUBO function is optimizing based on an inequality requiring that the number of servers included in the set of proposed servers is bounded by at least on of an upper limit $S_{max}$ and a lower limit $S_{min}$.

Such additional terms allow to further simplify and/or control the optimization procedure by applying further constraints to the QUBO function.

In at least one implementation, the QCP is configured to perform digital annealing using a plurality of binary decision variables, comprising: a first set of binary decision variables $y_s^d$ associated with each of the candidate sites s and CAC, indicating whether at least one antenna is built at the corresponding candidate sites s in the respective CAC. Such binary decision variables correspond to the desired optimized configuration of the communication network.

According to a second aspect, a quantum concept processor, QCP, in particular a digital annealing processing unit or a quantum annealing processing unit, is provided. The QCP is configured for performing one or more steps of the method according to the first aspect or any of its implementations, in particular the step of determining the set of proposed servers.

According to a third aspect, a computer program is provided. The computer program comprises instructions that, when the program is executed by one or more processors, cause the one or more processors to perform the method according to the first aspect or any of its implementations.

Further aspects and implementation details of the disclosed methods, devices and systems are disclosed in the attached set of claims and the detailed description provided below.

Short description of Figures

Figure 1 shows candidate sites for erecting new base stations.

Figure 2 shows a subset of candidate sites and antenna configurations considered as candidate best servers for a pixel.

Figure 3 shows an expected field strength of best server antennas in the area of the pixel.

Figure 4 shows the same set of candidate sites as Figures 2 to 4 with nine pixels to be considered.

Figures 5A and 5B show possible antenna configurations for each of the candidate sites.

Figure 6 shows a flow chart of a computer-implemented method for optimizing signal reception in a communications network.

Figures 7A and 7B compare simulated annealing and digital annealing, respectively.

Figures 8A to 11B show different optimization results for a given service area obtained using a prototype system.

Detailed description

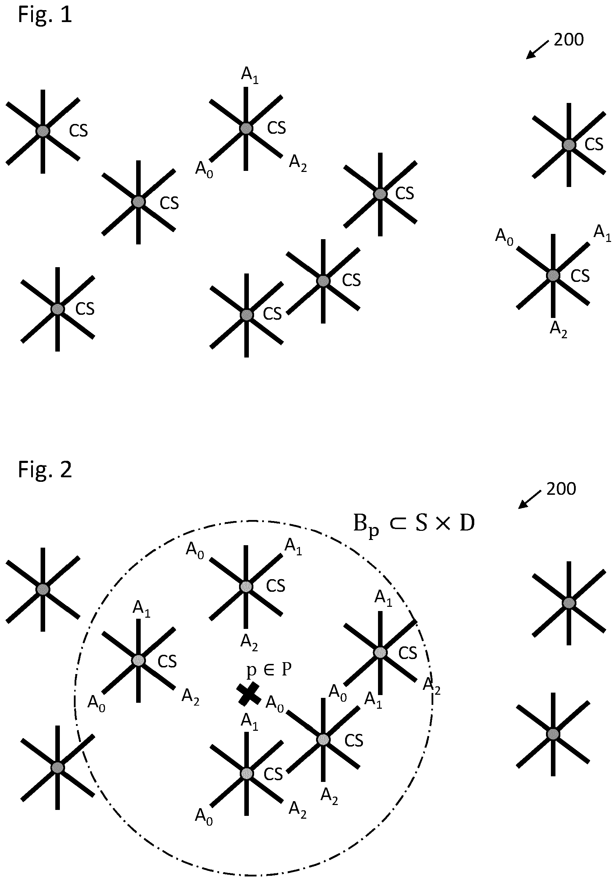

At first, some novel concepts for optimizing network coverage and performance are described and explained with regard to Figures 1 to 6. These concepts are applicable to different optimization approaches, including simulated annealing and digital annealing. Thereafter, specific solutions based on digital annealing are explained on a mathematical level. Some of these solutions make use of the novel concepts, while others are more general. While the use of the novel concepts in a digital annealing approach delivers very good results in a relatively short time, attention is drawn to the facts that the two aspects of this disclosure may also be used separately from each other.

Figure 1 shows a number of potential candidate sites CS for erecting new base stations. Each base station to be erected may be configured with a specific antenna configuration. The antenna configuration may be expressed as a number of antennas to be installed at each candidate site and its horizontal mounting angle, i.e. an orientation or direction of preferred signal emission and reception given by an angle with respect to a given reference direction, such as geographic north. There may be further configuration parameters, such as a vertical mounting angle of an antenna, i.e. an inclination or tilt angle with respect to the horizontal direction, a mounting height, etc. However, for a better understanding, only the above two parameters, i.e. the number of antennas and their orientation, will be considered in the following.

Moreover, due to the prevailing type of antenna used in communication networks, only two types of antenna installations will be considered in the specific example, i.e. sets of two antennas directed in opposite directions (two-sector antenna) and sets of three antennas directed in three different directions separated by 120° (three-sector antenna). In such installations, once the direction of a first antenna $A_0$ is chosen, the direction of the one remaining antenna $A_1$ or the two remaining antennas $A_1$ and $A_2$ to be installed at the same candidate site CS is also fixed.

In the example of Figure 1, a total of nine candidate sites CS is considered. In the following, this is referred to as set $S$ of candidate sites s. At each candidate site CS two different configurations of a three-sector antenna $A_0$, $A_1$ and $A_2$ are considered, i.e. antennas facing 0, 120 and 240°, or 60, 180 and 300°. The potential angle of the first reference antenna $A_0$ may be expressed as set of directions or antenna configurations $D$, i.e. $D$ = **{0,60}.** The orientation of the two remaining antennas $A_1$ and $A_2$ is implied. In a practical implementation, further configurations may be considered, for example a choice of a two- or three-sector antenna installation, oriented in 10° or 30° steps, e.g. $D$ = **{0, 30, 60, 90},** for example.

While the number of candidate sites CS and antenna configurations, e.g. the size of the sets S and D, may be relatively small, the number of their potential combinations is considerably larger, giving rise to a high degree of complexity in case an extended service area 200 is investigated, as detailed later. Thus, as detailed in Figure 2, for each pixel $p$ from a set of pixels $P$ to be considered, only a subset $B_P$ of all candidate sites $S$ and antenna configurations $D$ is considered. The subset $B_P$ also facilitates selection of a best server for each pixel, i.e. specific site and corresponding antenna configuration, as explained in further detail later.

This first preselection is based on an expected signal strength, which may be obtained by topographical models of the service area 200 and/or calculated distances. For example, as shown in Figure 2, only those candidate sites CS in proximity to the pixel $p$ and antenna configurations comprising an antenna $A_0$, $A_1$ or $A_2$ oriented roughly towards the location of the pixel $p$ are included in the subset $B_P$.

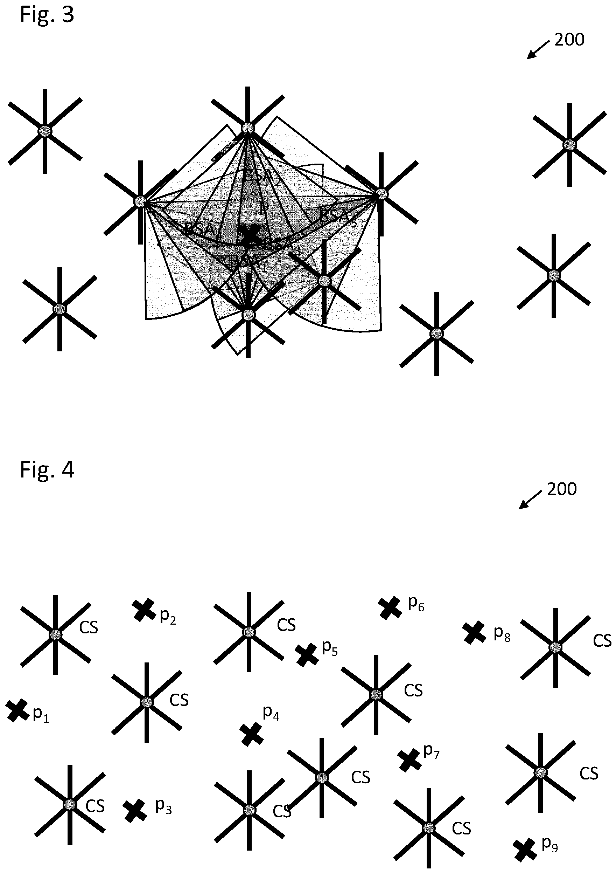

Based on the above preselection, each of the candidate sites CS and antenna configurations in the subset $B_P$ should provide a good coverage for the respective pixel p. This is indicated schematically in Figure 3, showing the expected field strength of the respective best server antennas $BSA_1$ to $BSA_5$ in the area of the pixel $p$. Figure 3 further shows that, if all of the candidate sites CS and antenna configurations in the subset $B_P$ would actually be built, the pixel $p$ would experience a very high signal interference, severely limiting the signal quality. To address this issue, a further selection criterion or heuristic is derived, that at most one of the serving antennas $BSA_1$ to $BSA_5$ should be built. This criterion should give rise to a high signal-to-noise ratio for pixel $p$ in case any one of the serving antennas $BSA_1$ to $BSA_5$ is built, or no or only very low coverage in case none of the serving antennas $BSA_1$ to $BSA_5$ is built. The latter is reduced by optimizing aggregated coverage for all pixels $p$, as detailed later.

So far, only a single pixel $p$ has been considered. Figure 4 shows the same set $S$ of candidate sites CS, with nine pixels $p_1$ to $p_9$ to be considered. Attention is drawn to the fact that each of the pixels $p$ has its own subset $B_P$ of best candidate servers, but that their interrelationships need to be considered during network planning. For example, a single candidate site can serve, or indeed disturb, a number of pixels $p$. This in turn leads to a great number of combinations to be considered. During cell planning, the effects of each possible candidate site and each possible antenna configuration on each considered pixel $p$ needs to be examined.

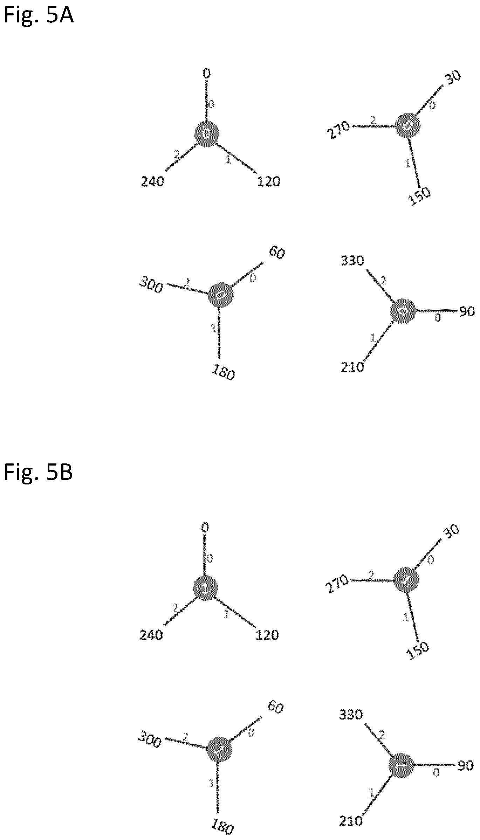

Figures 5A and 5B show possible configurations for only two candidate sites with three three-sector antennas each, having possible modulo angles of 0, 30, 60 and 90 degrees. As discussed in greater detail below, such configurations can be expressed in a compact form as binary decision variables. As detailed later, each of the possible four configurations per candidate site CS could be identified using a corresponding single bit, i.e. four bits per candidate site.

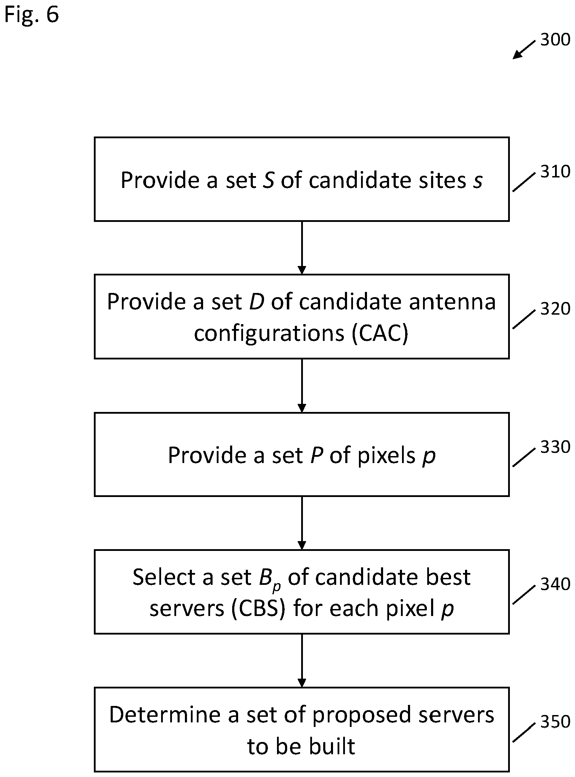

Figure 6 shows, in a schematic manner, how the above considerations can be used in a computer-implemented method 300 for optimizing signal reception in a communications network with a plurality of radio cells. As detailed above, each radio cell comprising at least one antenna configured for communicating with terminals located within a service area 200. The method comprises the steps 310 to 350 as detailed below.

Step 310: Provide a set S of candidate sites s for placement of at least one additional antenna. This first input to the optimization process can be provided by supplying x, y and, optionally, z coordinates of sites manually or automatically identified as candidate sites, e.g. roofs of high buildings, unused open land, or similar promising locations.

Step 320: Provide a set $D$ of candidate antenna configurations for each one of the candidate sites s. These may be uniform for all sites, i.e. placement of three-sector antennas spaced 120° apart from each other, or site specific, i.e.

limited by a field of view, or a mixture of both, for example a selection from multiple available types of configurations, e.g. a choice of installing a two-sector or three-sector antenna at each candidate site $s$.

Step 330: Provide a set $P$ of pixels $p$, each pixel $p$ corresponding to a geographic location within the service area for which signal reception should be optimized. Again, these input parameters may be provided automatically, e.g. a fixed grid of pixels at regular intervals, or may be provided manually, e.g. to cover specific points of interest, such as roads and railway lines with in the service area 200.

Step 340: Select a set $B_p$ of candidate best servers, CBS, for each pixel $p$ based on an expected radio signal strength for a terminal at the geographic location corresponding to the respective pixel $p$, each set $B_p$ comprising zero or more CBS corresponding to one of the specified candidate sites $s$ and one of the specified candidate antenna configurations. Normally, each set $B_p$ should contain at least one CBS. In case the set $B_p$ is empty, the corresponding pixel $p$ cannot be reliably served by any of the new candidate sites considered. This may be the case, for example, for pixels $p$ already covered by a nearby, pre-existing antenna, or a pixel $p$ located at a great distance with respect to any of the candidate sites. Pixels that cannot be served by any one of the candidate sites or any of the pre-existing antenna may be removed from the set P of pixel $p$ to simplify the later optimization step. The selection may be performed, for example, using known topological models of the service area 200 and corresponding simulations for signal propagation based on the locations of the candidate sites, the antenna configurations and the locations of the pixels.

Step 350: Determine at least one server proposed to be built. For example, a set of proposed servers may be selected from the union of all sets $B_p$ of CBS for all pixels $p$. Among other, the selection is based on the restriction that, from each set $B_p$ of CBS, at most a single CBS is selected as a proposed server. This restriction reduces interferences and limits the number of solutions. The selection is further based, at least on part, on optimizing a signal-to-noise ratio, SNR, computed for all pixels $p$ in case the at least one proposed server is built at the corresponding candidate site $s$ with the corresponding antenna configuration.

Among all possible configurations, the ones with the best overall coverage and best signal quality, i.e. highest SNR, should be identified in step 350 using optimization. One approach suitable for such statistical optimisation problems is simulated (thermal) annealing. Starting from an initial, typically random configuration or system state, available decisions variables are varied to find a global optimum. To limit the computational effort, an energy is associated with each system state. State changes are chosen randomly among accepted candidate changes. Candidate changes that result in a lower system energy are accepted. All other candidate changes are accepted randomly with decreasing probability with regard to increasing energy delta and time. With increasing time, acceptance of candidate state changes with increasing energy become more and more unlikely in order to reach a final state in the form of a local or global minimum.

Simulated annealing is applicable to the problem of network planning and optimization. However, the high combinatorial number of possible solutions combined with the high effort of computing the expected signal strength at each pixel results in a number of challenges. Each run of the optimization takes a long time and/or requires a high number of computational resources. This in turn implies that the size of the planning area, the number of candidate sites, considered configurations and/or considered pixels need to be limited.

Quantum or digital annealing is another optimization process for finding a global minimum of a given objective function over a given set of candidate solutions or states, by a process inspired by quantum fluctuations. Quantum annealing is particularly useful for problems, where the search space is discrete (combinatorial optimization problems) with many local minima, such as finding a ground state of a spin glass. The inventors have found that quantum annealing can also be applied for network cell planning.

The herein described solutions make use of an approach inspired by quantum computing. The calculation of optimized solutions of a stress or QUBO function for determining optimal coverage and signal quality may be performed by a so-called quantum concept processor. In the context of the present disclosure, a processor is defined as a quantum concept processor, which solves a so called "Ising model" or the equivalent quadratic unconstrained binary problem (QUBO). For example, this is a processor configured to solve an optimization problem by means of quantum annealing or quantum annealing emulation. Such a processor is for example based on conventional hardware technology, for example based on complementary metal-oxide-semiconductor (CMOS) technology. An example of such quantum concept processor is Fujitsu's Digital Annealer. Alternatively, any other quantum processors can be used for the herein described method, and in future times also such technologies that are based on real quantum bit technologies. Further examples of such quantum concept processors are the quantum annealer of DWave (e.g. 5000Q), but also quantum gate computers (IBM, Rigetti, OpenSuperQ, IonQ or Honeywell) and their future successors or alternative quantum computing designs making use of quantum optimization algorithms like Quantum Approximate Optimization Algorithm (QAOA) or Variational Quantum Eigensolver (VQE). In other words, a quantum concept processor as defined herein is a processor which realises the concept of minimization of a so-called quadratic unconstrained binary optimization (QUBO) function, either on a special processor based on classic technology, a quantum gate computer or on a quantum annealer.

Quantum concept computing based digital annealing has many advantages over conventional optimization algorithms, including higher processing speeds. This is partly due to the fact that quantum annealing allows to separate the objective function (or main QUBO) from specific constraints or optimisation targets. Thus, contrary to simulated annealing, wherein the entire cost function needs to be reformulated and re-computed, in digital annealing subsequent computations based on modified constraints or optimisation targets become computationally more efficient.

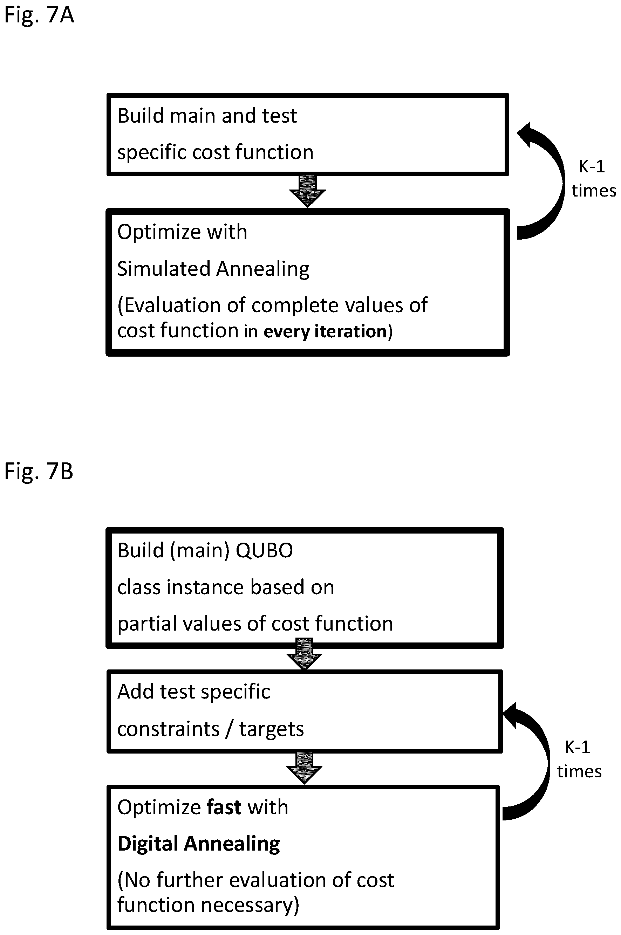

Figures 7A and 7B compare simulated annealing and digital annealing, respectively. They show that, in digital annealing, constraints and optimization goals are calculated based on a QUBO computed based on partial values of the cost function. Iterations in the search space are always influenced by these values of the QUBO. To the contrary, in simulated annealing, the control of the search and the computation of the cost function is based directly on the original data. Expressed differently, digital annealing enables the use of mass testing based on the same original data. Thus, the main QUBO can remain the same for all tests. However, each test can provide its own conditions. For example, a first test decides between one and three candidate sites, and a second test decides between one and ten candidate sites.

The arrows in Figures 7A and 7B visualize the entry point for each new test or scenario to be evaluated. As shown in Figure 7A, in simulated annealing, definition of the cost function for a given test is relatively straightforward. Accordingly, each test starts new by building a test specific cost function. What is expensive though, in terms of computing time, is the evaluation of the test-specific cost function. Since each test requires its own test function, performing multiple tests becomes computationally expensive. As shown in Figure 7B, in digital annealing, construction of the main QUBO is complex and requires more time. However, the main QUBO is the same for all test. Each test can use the same main QUBO and modify it using additional constraints. This can be implemented and computed efficiently. Thus, in case many different tests are performed, e.g. for large values of K, the QUBO based approach becomes more efficient.

In the described implementation based on Fujitsu's Digital Annealer, the individual terms of a QUBO can be computed separately. Subsequently, the individual terms are added up prior to performing digital annealing. However, the separate pre-computing has the advantage that individual parts of the QUBO can be re-used for different optimizations.

However, before a problem can be optimized with digital annealing, it needs to be formulated in a suitable form, i.e. using a quadratic form of the objective function and associated constraints. Moreover, the objective function and constraints or penalty terms must be expressed in terms of digital decision variables. Lastly, the number of decision variables should be limited as far as possible, in view of the number of available decision bits of present hardware implementations and/or to allow scaling of the solution to large sets of candidate sites.

These challenges are addressed and described in further detail below, with regard to a number of different QUBOs. Each of the described QUBOs addresses one or several of the above challenges. For example, the first QUBO focusses on how a non-quadratic equation representation of an expected signal to noise ratio can be reformulated using a quadratic equation. The second QUBO focusses on how to reduce the number of binary decision variables required to represent a single, standardized configuration of the candidate sites. The third QUBO focusses on how to extend the optimization to also consider pre-existing, fixed antenna locations. The fourth QUBO focusses on how to reduce the number of binary decision variables required to represent the pre-existing, fixed antenna locations and also introduces a further optimization goal for defining a number of selected candidate sites. The fifth QUBO focusses on how to keep the number of binary decision variables small and at the same time allow for different standardized configurations of the candidate sites (e.g. two-antenna or three-antenna configurations). The sixth QUBO focusses on how to reduce the number of binary decision variables even further by assuming that at most one candidate from a set of candidate best servers per pixel is built as detailed above. While the respective QUBOs are described separately, their respective contributions to the overall problem can be combined in many ways to achieve the respective advantages.

It is important to note that the reduction of the number of binary decision variables in a QUBO is important for the technical feasibility of this approach and to apply it to real-world scenarios: On the one hand, quantum processors and/or quantum inspired processors can only process a limited number of such variables and a naive QUBO formulation might easily exceed this number in a real-world scenario. On the other hand, a QUBO formulation with a reduced number of variables must reflect all relevant physical features to provide a meaningful solution.

In the following, the problem of cell planning detailed above will be expressed in and transformed to a mathematical form, which is amenable to a quantum concept computer, such as Fujitsu's Digital Annealer.

Formal problem description and formulation of first QUBO

Let $S$ be the number of candidate sites or cells. For each site $s \in S$, three antennas can be built. Hence, for each site, we count the antenna alternatives as $a \in A = \{0,1,2\}$. Assuming the use of three-sector antennas, the antenna alternatives of each site are separated by 120 degrees. Moreover, for each candidate site, all antenna positions within a 360 degree radius should be represented in a step size of 30 degrees. Since antennas are interchangeable, only four different configurations have to be considered. More precisely, as detailed above with respect to Figure 5A and 5B, for a candidate cell $s$, the antenna degrees of antenna $a = 0$ can be 0, 30, 60, 90. This gives rise to antenna degrees 120, 150, 180, 210 for antenna $a = 1$ and 240, 270, 300, 330 for antenna $a = 2$.

Define a set of directions modulo 120 degrees $D = \{0,30,60,90\}$, such that for any $d \in D$, the angle for an antenna is defined as $d_a = 120 \cdot a + d$. Note that for $d_a = 120 \cdot a + d$ we have

$$d_a \bmod 120 = d.$$

$N_d$: Number of directions for an antenna. In our case, $N_d = 4$.

$N_a$: Number of antennas for any cell. In our case, $N_a = 3$.

We define a first set of binary decision variables:

$$x_{s,a}^d := \begin{cases} 1, & \text{if degree } d_a \ (= 120 \cdot a + d) \text{ is chosen for antenna } a \text{ at site } s, \\ 0, & \text{otherwise.} \end{cases}$$

Constraint 1: Each antenna has at most one degree

At most one degree and the same degree is used for all antennas. Recall that $N_a$ is the number of antennas for any site. In our case, $N_a = 3$.

Each antenna a on any site s can have no more than one direction. An antenna may have no direction, which means it is not considered in the solution. Moreover, the degree modulo 120 degrees of all antennas of a site must coincide, i.e. the antennas must be separated by 120 degrees. This may be expressed as indicated in equation (1) below:

$$H_{\mathrm{one\_degree}} := \sum_{s \in S} \sum_{a \in A} \left( \sum_{d \in D} x_{s,a}^d - 1 \right) \cdot \sum_{d \in D} x_{s,a}^d = 0 \tag{1}$$

Alternatively the same constraint may be expressed as indicated in equation (2) below. In the used implementation of the annealer, the equation (2) can be evaluated more efficiently and therefore will be used in the following. Nonetheless, in other implementations, the same constraint may be expressed as shown in equation (1) above or in any other equivalent manner.

$$H_{\mathrm{allowed\_degrees}} := \sum_{s \in S} \sum_{a=0}^{N_a-2} \sum_{a'=a+1}^{N_a-1} \sum_{d_1 \in D} \sum_{d_2 \in D \setminus \{d_1\}} \left( x_{s,a}^{d_1} \cdot x_{s,a'}^{d_2} \right) = 0 \tag{2}$$

Constraint 2: Maximum one best server for any pixel

Aside from the sites and antennas, there are traffic pixels $p \in P$. The optimization problem consists of finding antenna positions for each site such that as many pixels as possible are covered in the best possible way.

We first discuss some parameters which need to be computed for obtaining an optimized solution. For fixed downlink and uplink threshold values DLTh and ULTh, a pixel $p$ is only covered by an antenna $a \in A$ of a site $s \in S$ with $d \in D$ and if

$$\mathrm{DLR}_{(p,s,a)}^d \geq \mathrm{DLTh}, \tag{3}$$

$$\mathrm{ULR}_{(p,s,a)}^d \geq \mathrm{ULTh}, \tag{4}$$

where

$$\mathrm{DLR}_{(p,s,a)}^d := -(\mathrm{Antenna\_Gain}_{(p,s)}^{d_a} - \mathrm{Pathloss}_{(p,s)} - \tag{5}$$

$$\mathrm{TxLoss}_{(s)}) + \mathrm{Pilot}_{(s)}, \text{ and}$$

$$\mathrm{ULR}_{(p,s,a)}^d := \mathrm{DLR}_{(p,s,a)}^{d_a} + \mathrm{LinkBudget}_{(s)} \tag{6}$$

In the above, DLR and ULR indicate signal strength. In the described implementation, DLR specifically indicates a downlink reference value (in dB) and ULR indicates an uplink reference value (in dB). These values can be computed for each pixel $p$ based on the antenna location indicated by the site index $s$ and direction $d_a$, as well as a provided model of the service area 200 under investigation, modelling the signal propagation, etc. Suitable threshold values DLTh and ULTh can be determined experimentally to obtain an acceptable coverage at pixel $p$. Note that in the above equations, $d_a = 120 \cdot a + d$, for corresponding $d$ and $a$.

For each pixel, we need to find the best server site and antenna along with its degree (best server or best server antenna - BSA), provided that the pixel is covered. With this in regard, we define a set of binary decision variables to express, if for a pixel $p \in P$, a cell antenna $a \in A$, $s \in S$ and $d \in D$ is the best server. Consequently, the binary decision variables used during the optimization can also be used to identify the best server for each pixel. More precisely, we define the set of binary decision variables as follows:

$$b_{p,s,a}^d := \begin{cases} 1, & \text{if antenna } a \text{ of site } s \text{ with degree } d_a \text{ is BSA for pixel } p, \\ 0, & \text{otherwise.} \end{cases}$$

If one of the inequalities (3), (4) is violated, the corresponding antenna $a$ in its configuration cannot be the best server. Hence, we fix those $b_{p,s,a}^d$ to zero. Hence, in a more generic manner, we could express the decision variable $b_{p,s,a}^d$ as follows:

$$b_{p,s,a}^d := \begin{cases} \text{fixed as } 0, & \text{if constraint (3) or (4) is violated,} \\ 1, & \text{if antenna } a \text{ of site } s \text{ with degree } d_a \text{ is BSA for pixel } p, \\ 0, & \text{otherwise.} \end{cases}$$

For each pixel, at most one antenna can be the best server antenna. In particular, we allow no best server antenna if a pixel is not covered. This constraint can be enforced by:

$$H_{\text{one\_best\_server}} := \sum_{p \in P} \left( \sum_{s \in S} \sum_{a \in A} \sum_{d \in D} b_{p,s,a}^d \right) \cdot \left( \sum_{s \in S} \sum_{a \in A} \sum_{d \in D} b_{p,s,a}^d - 1 \right) = 0 . \tag{7}$$

Moreover, a cell antenna a with degree d can only be candidate for the best server if the antenna is in that configuration. Hence we must enforce

$$H_{\text{x\_over\_b}} := \sum_{p \in P} \sum_{s \in S} \sum_{a \in A} \sum_{d \in D} \left( b_{p,s,a}^d - x_{s,a}^d \right) \cdot b_{p,s,a}^d = 0 . \tag{8}$$

In particular, the last two conditions can be enforced by a QUBO constraint.

With $H_{\text{one\_best\_server}} = 0$ and $H_{\text{x\_over\_b}} = 0$ satisfied, we enforce that, for each pixel p, the correct bit $b_{p,s,a}^d$ is selected. This can be done by minimizing

$$H_{\text{best\_server}} := \sum_{p \in P} \sum_{s \in S} \sum_{a \in A} \sum_{d \in D} -\text{DLR}_{(p,s,a)}^d \cdot b_{p,s,a}^d . \tag{9}$$

Formulating the objective function: SNR Optimization

The optimization target is to maximize the coverage under the constraints discussed above. Physically, this corresponds to maximizing an aggregated signal-to-noise ratio, summed up across all pixels. This can be expressed in the following objective function

$$H_{\mathbf{obj}} := -\sum_{p \in P:\ \mathrm{SNR(p)} \geq \mathrm{SNRTh}} \mathrm{SNR(p)} \qquad (10)$$

which needs to be minimized for some fixed SNR threshold value *SNRTh.* Here, with $\boldsymbol{x} = \left(x_{s,a}^{d}\right)_{(s,a,d) \in S \times A \times D}$ and $\boldsymbol{b} = \left(b_{p,s,a}^{d}\right)_{(s,a,d) \in S \times A \times D}$:

$$\mathrm{SNR(p)}(\boldsymbol{x}, \boldsymbol{b}) = \sum_{s \in S}\sum_{a \in A}\sum_{d \in D}\left( \mathrm{DLR}_{(p,s,a)}^{d} - 10 \right. \qquad (11)$$

$$\left. \cdot \log_{10}\left( \mathrm{load} \cdot \sum_{s' \in S}\sum_{a' \in A}\sum_{d' \in D:(s,a) \neq (s',a')} \mathrm{DLR\_W}_{(p,s',a',d')} \cdot x_{s',a'}^{d'} \right) \right) \cdot b_{p,s,a}^{d}$$

The first term depends on the downlink reference strength $\mathrm{DLR}_{p,s,a}^{d}$ in Decibel (dB) and represents the signal contribution of the best serving antenna selected by the decision variables $b_{p,s,a}^{d}$. The second term depends on the downlink reference strength DLR_W in Watt (W) and represents the noise contribution or interference of all other antennas by the decision variables $x_{s',a'}^{d'}$.

Conversion: Decibel and Watt

Attention is drawn to the fact that, in general, a Decibel value, e.g. of a signal strength, such as a downlink or uplink reference value, a path loss, a gain as specified above, can be converted to Watt and vice-versa as follows.

Given a value Val in Decibel, we can obtain the corresponding value Val_W in Watt with the following conversion:

$$\mathrm{Val\_W} = 10^{\frac{\mathrm{Val}}{10}}$$

Given a value Val_W in Watt, we can obtain the corresponding value Val in Decibel with the following conversion:

$$\mathrm{Val}_{db} = 10 \cdot \log_{10}(\mathrm{Val\_W}).$$

The optimization parameter *load* in formula (11) above indicates to what extend interference is considered. In the described implementations, this is set to a value of 0.5. It may be varied, for example in the range of 0.3 to 0.8, to give more or less weight to the interference caused by other antennas. This may depend on the specific signal transmission technology and coding, for example.

Unfortunately, this (non-linear) form of the objective function does not allow for a QUBO formulation. Put differently, this objective function cannot be optimized directly by a digital annealer. However, attention is drawn to the fact that the function $\log_{10}(x)$ is monotonous. Hence, instead of the condition

$$\mathrm{SNR}(p) \geq \mathrm{SNRTh}, \qquad (12)$$

we can formulate an equivalent condition

$$10^{-\mathrm{SNR}(p)/10} \leq 10^{-\mathrm{SNRTh}/10}. \qquad (13)$$

For a valid decision bit vector **b** let $b_{p,s^*,a^*}^{d^*}$ be the single bit with value 1 and all other bits have value 0. Then we can do the following transformation:

$$10^{-\frac{\text{SNR}(p)(\boldsymbol{x},\boldsymbol{b})}{10}} \tag{14}$$

$$= 10^{-\sum_{s\in S}\sum_{a\in A}\sum_{d\in D}\left(\text{DLR}_{(p,s,a)}^{d}-10\cdot\log_{10}\left(\text{load}\cdot\sum_{s'\in S}\sum_{a'\in A:}\sum_{d'\in D:(s,a)\neq(s',a')}\text{DLR\_W}_{(p,s',a',d')}\cdot x_{s',a'}^{d'}\right)\right)\cdot b_{p,s,a}^{d}/10}$$

$$= 10^{-\left(\text{DLR}_{(p,s,a)}^{d}-10\cdot\log_{10}\left(\text{load}\cdot\sum_{s'\in S}\sum_{a'\in A:}\sum_{d'\in D:(s,a)\neq(s',a')}\text{DLR\_W}_{(p,s',a',d')}\cdot x_{s',a'}^{d'}\right)\right)\cdot b_{p,s^*,a^*}^{d^*}/10}$$

$$= 10^{-\left(\text{DLR}_{(p,s,a)}^{d}-10\cdot\log_{10}\left(\text{load}\cdot\sum_{s'\in S}\sum_{a'\in A:}\sum_{d'\in D:(s,a)\neq(s',a')}\text{DLR\_W}_{(p,s',a',d')}\cdot x_{s',a'}^{d'}\right)\right)/10}\cdot b_{p,s^*,a^*}^{d^*}$$

$$= \text{load}\cdot\sum_{s'\in S}\sum_{\substack{a'\in A:\\s'\neq s\ or\ a'\neq a}}\sum_{d'\in D}\frac{DLR\_W_{(p,s',a',d')}}{10^{\frac{\text{DLR}_{(p,s,a)}^{d}}{10}}}\cdot x_{s',a'}^{d'}\cdot b_{p,s^*,a^*}^{d^*}$$

$$= \text{load}\cdot\sum_{s\in S}\sum_{a\in A}\sum_{d\in D}\sum_{s'\in S}\sum_{\substack{a'\in A:\\s'\neq s\ or\ a'\neq a}}\sum_{d'\in D}\frac{DLR\_W_{(p,s',a',d')}}{10^{\text{DLR}_{(p,s,a)}^{d}/10}}\cdot x_{s',a'}^{d'}\cdot b_{p,s,a}^{d}$$

The last line is a QUBO, i.e. can be expressed in quadratic form.

Therein, $x_{s',a}^{d'}$, and $b_{p,s,a}^{d}$ are the above binary decision variables, which are multiplied with a real value.

While this function (14) is not identical to the original objective function defined above in (10) and (11) (which has a logarithmic form), it can be computed directly by a digital annealer unit. Moreover, while it does not work on the same values as the original objective function defined above in (10) and (11), due to the monotony of the exponential function applied in (14), it should lead to a similar set of optimized decision variables as the original objective function.

Hence, we can use digital annealing to minimize the following equivalent objective function:

$$H_{\text{SNR}} := \sum_{p\in P}\sum_{s\in S}\sum_{a\in A}\sum_{d\in D}\left(\text{load}\cdot\sum_{s'\in S}\sum_{\substack{a'\in A:\\s'\neq s\ or\ a'\neq a}}\sum_{d'\in D}\frac{DLR\_W_{(p,s',a',d')}}{10^{\text{DLR}_{(p,s,a)}^{d}/10}}\cdot x_{s',a'}^{d'}-10^{-\text{SNRTh}/10}\right)\cdot b_{p,s,a}^{d} \tag{15}$$

Note that, when minimized under the constraints discussed above, the equivalent objective function (15) will favour configurations with low interference between the antennas and high signal strength for the pixels (first part of the term under the sums) while simultaneously optimizing the coverage of the pixels by a best server, i.e. the number of pixels for which the bracket attains a negative value.

When also taking into account all constraints discussed above this leads to the following QUBO which needs to be optimized:

$$HQ = w_A\cdot H_{\text{allowed\_degrees}} + w_B\cdot H_{\text{one\_best\_server}} + w_C\cdot H_{\text{x\_over\_b}} + w_D\cdot H_{\text{SNR}}$$

$w_A$, $w_B$, $w_C$, and $w_D$ are respective QUBO penalty weights. In the described embodiments, the penalty weights $w_A$, $w_B$, and $w_C$ are chosen to implement the respective QUBO terms as hard constraints.

Attention is drawn to the fact that constraint (9) discussed earlier is often fulfilled automatically through minimizing the objective function $H_{\text{SNR}}$. Thus, in practical implementations, the term $H_{\text{one\_best\_server}}$ may be omitted in the final QUBO.

In practise, if a large number of pixels, candidate sites, and antenna configurations are to be considered, the set of binary decision variables becomes very large, and may exceed the number of decision variables available in existing quantum concept processors. Thus, in the following, a number of further optimizations are considered, which help to reduce the number of binary decision variables.

Formulation of second QUBO

In order to simplify the first QUBO, and hence allow its implementation for more pixels and/or candidate sites, in the second formulation, we assume the additional auxiliary constraint that each new site that is built contains all of its antennas. This constraint has practical reasons. Although this restriction may reduce the maximal possible coverage, it opens the possibility for a different QUBO formulation which requires less bit variables.

As in the first QUBO formulation, we need to find the best server site and antenna along with its degree for each pixel, provided that the pixel is covered. Therefore, we again define binary variables for each pixel $p \in P$, $s \in S$ and $d \in D$ such that

$$b_{p,s}^d := \begin{cases} \text{fixed as } 0, & \texttt{if constraint (3) or (4) is violated} \\ & \texttt{for each antenna } a \texttt{ and degree } d_a, \\ 1, & \texttt{if any antenna } a \texttt{ of site } s \texttt{ with} \\ & \texttt{degree } d_a \texttt{ is BSA for pixel } p, \\ 0, & \texttt{otherwise.} \end{cases}$$

Note that we save the index for the antenna $a \in A$ in contrast to the first QUBO formulation.

Constraint 1: Allowed degrees for antennas on a site

As before, each cell can only be built in one configuration. Hence, the modulo degree of a site has to coincide for all pixels. This can be enforced by the constraint:

$$H_{\texttt{allowed\_degrees}} = \sum_{s \in S} \sum_{d_1 \in D} \sum_{d_2 \in D/\{d_1\}} \left( \sum_{p \in P} b_{p,s}^{d_1} \right) \cdot \left( \sum_{p \in P} b_{p,s}^{d_2} \right) = 0 \tag{16}$$

Constraint 2: Maximum one best server for any pixel

Moreover, for each pixel there can be at most one best server site, which is satisfied if

$$H_{\texttt{one\_best\_server}} = \sum_{p \in P} \left( \sum_{s \in S} \sum_{d \in D} b_{p,s}^d \right) \cdot \left( \sum_{s \in S} \sum_{d \in D} b_{p,s}^d - 1 \right) = 0 \,. \tag{17}$$

For each pixel, we want to assign the site and configuration which contains an antenna that is the best server antenna for the pixel. This is obtained by minimizing

$$H_{\texttt{best\_server}} = -\sum_{p \in P} \sum_{s \in S} \sum_{d \in D} \max_{a \in A:\, \text{ULR}_{(p,s)}^{(120 \cdot a+d)} > \text{ULTh}} \left\{ \text{DLR}_{(p,s)}^{(120 \cdot a+d)} \right\} \cdot b_{p,s}^d \tag{18}$$

As detailed above with respect to the first QUBO, this term may be omitted in some implementations.

Constraint 3: Decide if a candidate site is selected

In order to express the SNR value for a pixel, we first need to introduce a second set of binary variables. For $s \in S$ and $d \in D$, we define

$$y_s^d := \begin{cases} 1, & \text{if any antenna } a \text{ of site } s \text{ is the BSA for any pixel} \\ 0, & \text{otherwise} \end{cases}$$

To enforce that these binary variables behave as expected, i.e. that a decision variable is forced to one only if the corresponding site with its configuration is the best server for at least one pixel, we require

$$H_{\text{chosen}} = \sum_{s \in S} \sum_{d \in D} (1 - y_s^d) \left( \sum_{p \in P} b_{p,s}^d \right) = 0 \tag{19}$$

Note also that we use this second set of binary variables, which replaces the first set of binary decision variables of the first QUBO, to decide whether all three antennas or no antenna of a site are built.

Formulating the objective function: SNR Optimization

With this constraint, we can define the SNR value of a pixel $p \in P$ for some fixed threshold SNRTh as

$$
\text{SNR}(p) = \sum_{s \in S} \sum_{d \in D} \left[ \max_{a \in A: \ \text{ULR}_{(p,s)}^{(120 \cdot a + d)} > \text{ULTh}} \left\{ \text{DLR}_{(p,s)}^{(120 \cdot a + d)} \right\} \right.
$$
$$
\left. - 10 \cdot \log_{10} \left( \text{load} \cdot \sum_{s' \in S} \sum_{d' \in D} \sum_{a' \in A: \ s \neq s' \ \text{or} \ a' \notin \ \underset{a \in A: \ \text{ULR}_{(p,s)}^{(120 \cdot a + d)} > \text{ULTh}}{\text{argmax}} \left\{ \text{DLR}_{(p,s)}^{(120 \cdot a + d)} \right\},} \text{DLR\_W}_{(p,s',a',d')} y_{s'}^{d'} \right) \right] \cdot b_{p,s'}^{d} \tag{20}
$$

provided that the value is larger than SNRTh, or zero otherwise.

Since the above formulation is not yet in QUBO form, we adapt it in a similar way as for the first QUBO formulation. We end up with the following optimization target for the second QUBO:

$$
H_{\text{SNR}} := \sum_{p \in P} \sum_{s \in S} \sum_{d \in D} \left( \sum_{s' \in S} \sum_{d' \in D} \sum_{a' \in \tilde{A}(p,s,s'd)} \frac{\text{load} \cdot \text{DLR\_W}_{(p,s',a',d')}}{10^{\max_{a \in A: \text{ULR}_{(p,s)}^{(120 \cdot a + d)} > \text{ULTh}} \left\{ \text{DLR}_{(p,s)}^{(120 \cdot a + d)} \right\} / 10}} \right) \cdot b_{p,s}^{d} \tag{21}
$$

$$
\text{with } \tilde{A}(p,s,s',d) = \left\{ a' \in A: s \neq s' \text{ or } a' \notin \underset{a \in A: \text{ULR}_{(p,s)}^{(120 \cdot a + d)} > \text{ULTh}}{\text{argmax}} \left\{ \text{DLR}_{(p,s)}^{(120 \cdot a + d)} \right\} \right\}.
$$

The above formulation of the objective function requires a significantly reduced number of binary decision bits, as generally only one decision bit is required per candidate site and antenna degree, rather than one per candidate site, antenna degree and antenna number.

When also taking into account all constraints discussed above this leads to the following QUBO which needs to be optimized:

$$
HQ = w_A \cdot H_{\text{allowed\_degrees}} + w_B \cdot H_{\text{one\_best\_server}} + w_C \cdot H_{\text{chosen}} + w_D \cdot H_{\text{SNR}}
$$

Formulation of the third QUBO

In this formulation we maintain the additional auxiliary constraint of the second QUBO that each new site that is built contains all of its antennas.

Additionally, we also incorporate the concept of pre-existing antenna, which are assumed to remain in the network unchanged. That is to say, we model already built (fixed) sites in the network, and consider it with regard to coverage, signal and interference provided.

Attention is drawn to the fact that the disclosed methods can also be used to optimize existing networks, for example by removing or re-orientating existing antennas, which cause high interference to other existing or newly planned antennas. However, in this case the existing antennas under investigation should be modelled as candidate sites, rather than as fixed antennas.

Each of the fixed sites consists of 1, 2 or 3 antennas at some pre-determined angle (degree). Let $s_f \in S_f$ denote a fixed site, where $s_f$ are all the fixed sites. Moreover, let $d_f \in D_f^{s_f}$ be the angles of all the antennas on a fixed site $s_f$. Note that $D_f^{s_f}$ contains more than one angle, each angle corresponding to a specific antenna on site $s_f$. $D_f^{s_f}$ may also be referred to as the antenna configuration of the fixed site $s_f$.

These fixed sites can act as a best server for the required pixels, as well as cause interference. To account for both the cases, we define a new bit variable $z_{p,s_f}$, such that

$$z_{p,s_f} := \begin{cases} \text{fixed as } 0, & \text{if DLR or ULR values for pixel p from site } s_f \\ & \text{do not fulfil thresholds for all antennas,} \\ 1, & \text{if pixel p has fixed site } s_f \text{ as its best server site,} \\ 0, & \text{otherwise.} \end{cases}$$

Note that the condition for fixed bits is similar to the constant bit condition for the $b_{p,s}^d$ bits, as defined above.

We concretely define the constant bits as follows:

Take all bits $b_{p,s}^d = 0$, if for pixel p the DLR value is less than DLTh or if the ULR value is less than the threshold ULTh, for all the antennas of site s *in configuration d.*

Take all bits $z_{p,sf} = 0$, if for pixel p the DLR value is less than DLTh or if the ULR value is less than the threshold ULTh, for all the antennas of fixed site $s_f$.

Constraint 1: Allowed degrees for antennas on a site

As before, any site can only be built in one configuration. This can be enforced by the constraint (16) above.

Constraint 2: Maximum one best server for any pixel

Similar to the above, any pixel can have at most one best server. Note that a pixel can select its best server either from the candidate sites or from the fixed sites. This condition is satisfied by the following penalty QUBO term.

$$H_{\text{one\_best\_server}} \tag{22}$$

$$= \sum_{\forall p \in P} \left( \sum_{\forall s \in S} \sum_{\forall d \in D} b_{p,s}^d + \sum_{\forall s_f \in S_f} z_{p,s_f} \right)$$

$$\cdot \left( \left[ \sum_{\forall s \in S} \sum_{\forall d \in D} b_{p,s}^d + \sum_{\forall s_f \in S_f} z_{p,s_f} \right] - 1 \right) = 0$$

Constraint 3: Decide if a candidate site is selected

To facilitate the computation of SNR values, we need to first decide if a given candidate site s with a specific modulo degree d is selected or not. This is achieved by the same penalty term (19) as before.

Formulating the objective function: SNR Optimization

We now define the maximum DLR value on a pixel p from one of a candidate site or fixed site, along with the corresponding best angles.

For the candidate sites:

$$a^*_{p,s,d} = \underset{\substack{\forall a \in A, \ s.t. \\ \mathrm{ULR}^{(120 \cdot a + d)}_{(p,s)} > \mathrm{ULTh}, \\ \mathrm{DLR}^{(120 \cdot a + d)}_{(p,s)} > \mathrm{DLTh},}}{\mathrm{argmax}} \left\{ \mathrm{DLR}^{(120 \cdot a + d)}_{(p,s)} \right\} \ given \ p, s, d \qquad (23)$$

$$\mathrm{DLR}^*_{p,s,d} = \underset{\substack{\forall a \in A, \ s.t. \\ \mathrm{ULR}^{(120 \cdot a + d)}_{(p,s)} > \mathrm{ULTh}, \\ \mathrm{DLR}^{(120 \cdot a + d)}_{(p,s)} > \mathrm{DLTh}}}{\mathrm{max}} \left\{ \mathrm{DLR}^{(120 \cdot a + d)}_{(p,s)} \right\} \ given \ p, s, d \qquad (24)$$

And for the fixed sites:

$$d^*_{p,s_f} = \underset{\substack{\forall d_f \in D^{s_f}_f, \ s.t. \\ \mathrm{ULR}^{d_f}_{(p,s_f)} \geq \mathrm{ULTh}, \\ \mathrm{DLR}^{d_f}_{(p,s_f)} \geq \mathrm{DLTh}}}{\mathrm{argmax}} \left\{ \mathrm{DLR}^{d_f}_{(p,s_f)} \right\} \ given \ p, s_f \qquad (25)$$

$$\mathrm{DLR\_F}^*_{p,s_f} = \underset{\substack{\forall d_f \in D^{s_f}_f, \ s.t. \\ \mathrm{ULR}^{d_f}_{\left(p,s_f\right)} \geq \mathrm{ULTh}, \\ \mathrm{DLR}^{d_f}_{\left(p,s_f\right)} \geq \mathrm{DLTh}}}{\mathrm{max}} \left\{ \mathrm{DLR}^{d_f}_{(p,s_f)} \right\} \ given \ p, s_f \qquad (26)$$

Therein, $a^*_{p,s,d}$ indicates the strongest antenna of a given candidate site and configuration for a given pixel, $\mathrm{DLR}^*_{p,s,d}$ indicates the DLR value of the strongest antenna of the given candidate site and configuration for the given pixel, $d^*_{p,s_f}$ indicates the direction of the strongest antenna of a given fixed site for a given pixel, and $\mathrm{DLR\_F}^*_{p,s_f}$ indicates the DLR value of the strongest antenna of the antennas of the fixed site for the given pixel. In the following $DLR\_F_{(p,sf,df)}$ is used for $\mathrm{DLR}^{d_f}_{(p,s_f)}$ to indicate that it refers to a fixed site. The same notation is also used for DLR_W_F to indicate its value in Watt.

SNR term if candidate site is chosen:

With the help of the above definitions, we can now formulate the total SNR value on any given pixel *p*, in the case that the pixel *p* selects a candidate site at some modulo degree *d,* as its best server.

$$(27)$$

$$
\text{SNR}(p) = \sum_{\forall s \in S} \sum_{\forall d \in D} \left[ DLR^*_{(p,s,d)} \right.
$$

$$
- 10 \cdot \log_{10} \left( \text{load} \cdot \sum_{\forall s' \in S} \sum_{\forall d' \in D} \sum_{\substack{\forall a' \in A \\ (s, a^*_{p,s,d}) \neq (s', a')}} DLR\_W_{(p,s',a',d')} \cdot y^{d'}_{s'} \right.
$$

$$
\left. \left. + \text{load} \cdot \sum_{\forall s_f \in S_f} \sum_{\forall d_f \in D^{s_f}_f} DLR\_W\_F_{(p,s_f,d_f)} \right) \right] \cdot b^d_{p,s}
$$

Therein, DLR_W_F$_{(p,s_f,d_f)}$ represents the downlink reference value of an antenna at fixed site $s_f$ with antenna direction $d_f$ for a given pixel $p$, indicated in Watt. Note that, contrary to the parameter DLR* and DLR_W parameterized by the term $d_a = 120 \cdot a + d$ to determine the respective antenna orientation for the newly considered sites, the corresponding parameters DLR_F* and DLR_W_F are parameterized by the fixed antenna direction $d_f$ to determine the fixed antenna orientation.

SNR term if fixed site is chosen:

Similarly, the total SNR value on any given pixel $p$, in the case that the pixel $p$ selects a fixed site as its best server.

$$(28)$$

$$
\text{SNR\_fixed}(p) = \sum_{\forall s_f \in S_f} \left[ DLR\_F^*_{(p,s_f)} - 10 \cdot \log_{10} \left( \text{load} \cdot \sum_{\forall s \in S} \sum_{\forall d \in D} \sum_{\forall a \in A} DLR\_W_{(p,s,a,d)} \cdot y^d_s \right. \right.
$$

$$
\left. \left. + \text{load} \cdot \sum_{\forall s_f \in S_f} \sum_{\substack{\forall d'_f \in D^{s'_f}_f \\ (s'_f, d'_f) \neq (s_f, d^*_{p,s_f})}} DLR\_W\_F_{(p,s'_f,d'_f)} \right) \right] \cdot z_{p,s_f}
$$

With the same considerations as for the first QUBO we can find a QUBO formulation with similar minima.
The objective QUBO term for the problem can be stated as follows:

$$H_{\text{SNR}} = \sum_{\forall p \in P} \sum_{\forall s \in S} \sum_{\forall d \in D} \left( \left( load \cdot \sum_{\forall s' \in S} \sum_{\forall d' \in D} \sum_{\substack{\forall a' \in A \\ (s, a^*_{p,s,d}) \neq (s', a')}} \frac{\text{DLR\_W}_{(p,s',a',d')}}{10^{\text{DLR}^*_{p,s,d}/10}} \cdot y^{d'}_{s'} \right) \right.$$

$$\left. + \left( load \cdot \sum_{\forall s_f \in S_f} \sum_{\forall d_f \in D^{s_f}_f} \frac{\text{DLR\_W\_F}_{(p,s_f,d_f)}}{10^{\text{DLR}^*_{(p,s,d)}/10}} \right) - 10^{-\text{SNRTh}/10} \right) \cdot b^d_{p,s}$$

$$+ \sum_{\forall p \in P} \sum_{\forall s_f \in S_f} \left( \left( load \cdot \sum_{\forall s \in S} \sum_{\forall d \in D} \sum_{\forall a \in A} \frac{\text{DLR\_W}_{(p,s,a,d)}}{10^{\text{DLR\_F}^*_{(p,s_f)}/10}} \cdot y^d_s \right) \right.$$

$$\left. + \left( load \cdot \sum_{\forall s' \in S_f} \sum_{\substack{\forall d'_f \in D^{s'_f}_f \\ (s'_f, d'_f) \neq (s_f, d^*_{p,s_f})}} \frac{\text{DLR\_W\_F}_{(p,s'_f,d'_f)}}{10^{\text{DLR\_F}^*_{(p,s,d)}/10}} \right) - 10^{-\text{SNRTh}/10} \right) \cdot z_{p,s_f}$$

$$(29)$$

When also taking into account all constraints discussed above this leads to the following QUBO which needs to be optimized:

$$HQ = w_A \cdot H_{\texttt{allowed\_degrees}} + w_B \cdot H_{\texttt{one\_best\_server}} + w_C \cdot H_{\text{chosen}} + w_D \cdot H_{\text{SNR}}$$

Formulation of the fourth QUBO

In this formulation we maintain the additional auxiliary constraint (8) of the second and third QUBO that each new site that is built contains all of its antennas. Moreover, like in the third QUBO, we also consider already built (fixed) antennas. However, this is done in a different manner, which results in a reduced number of binary decision variables. Moreover, the fourth QUBO includes a further restriction on the number of selected candidate sites.

All the fixed sites are already present in the network with pre-defined antennas and angles. Suppose $\text{DLR\_F}^*_p$ to be the best DLR value offered to pixel $p$ from all the fixed sites, and let $f^*_p$ be the best fixed site for pixel $p$. Hence, we only need to decide if a pixel $p$ has a fixed site $s_f$ as its best server or not.

$$\text{DLR\_F}^*_p = \max_{\substack{\forall f \in S \\ \forall d_f \in D_f}} \text{DLR}^{d_f}_{(p,f)}, \qquad (30)$$

$$(f^*_p, d^*_{fp}) = \operatorname*{argmax}_{\substack{\forall f \in S \\ \forall d_f \in D_f}} \text{DLR}^{d_f}_{(p,f)}. \qquad (31)$$

Equation (31) defines, for each pixel $p$, the best fixed site $f^*_p$ and antenna $d^*_{fp}$ from all fixed sites $S_f$ and antenna directions $D_f^{s_f}$ achieving the best signal level.

Based on the above, we define a new bit variable $z_p$, such that

$$z_p := \begin{cases} \text{fixed as } 0, & \text{if DLR\_F}_p^* \text{ and ULR\_F}_{p,f_p^*,d_{fp}^*} \text{ are less than} \\ & \text{the required threshold values for pixel } p, \\ 1, & \text{if a pixel has fixed site } f_p^* \text{ as its best server site,} \\ 0, & \text{otherwise.} \end{cases}$$

We concretely define the constant bits as follows:

Take all bits $b_{p,s}^d = 0$, if for pixel $p$ the DLR value is less than DLTh or if the ULR value is less than the threshold ULTh, for all the antennas of site $s$ *in configuration d.*

If a new cell is built at a candidate site s at a modulo degree *d,* we can compute the maximal DLR value $\text{DLR}_{p,s,d}^*$ offered by this $(s, d)$ pair for each pixel $p$. Define $\text{DLR\_F}_p^*$ as above by the best DLR value offered to pixel $p$ from all the fixed sites, and let $f_p$* be the best fixed site for pixel $p$. If $\text{DLR}_{p,s,d}^* < \text{DLR\_F}_p^*$, then we can certainly claim that for pixel $p$ the best server antenna cannot be at candidate-site $s$ at modulo degree $d$, but is rather at fixed site $f_p^*$. This implies $b_{p,s}^d$ can be set to a constant 0.

In the process, we need to take care of the threshold values DLTh and ULTh for DLR and ULR, respectively.

The complete description of the *b*-bits can be formally stated as follows:

$$b_{p,s}^d := \begin{cases} \text{fixed as } 0, & \text{if (3) or (4) is violated for each antenna a and degree } d_a, \\ \text{fixed as } 0, & \text{if DLR}_{p,s,d}^* < \text{DLR\_F}_p^*, \\ 1, & \text{if any antenna a of site s with degree } d_a \text{ is BSA for pixel } p, \\ 0, & \text{otherwise.} \end{cases}$$

Together, $b_{p,s}^d$ and $z_p$ represent the complete problem formulation as a QUBO.

Constraint 1: Allowed degrees for antennas on a site

As before, any site can only be built in one configuration. This can be enforced by the constraint (16) above.

Constraint 2: Maximum one best server for any pixel

As before, any pixel can have at most one best server. Note that a pixel can select its best server either from the candidate sites or from the fixed sites. This condition is satisfied by the following, simplified penalty QUBO term based on the new bit variable $z_p$:

$$H_{\text{one\_best\_server}} = \sum_{\forall p \in P} \left( \left( \sum_{\forall s \in S} \sum_{\forall d \in D} b_{p,s}^d \right) + z_p \right) \cdot \left( \left[ \left( \sum_{\forall s \in S} \sum_{\forall d \in D} b_{p,s}^d \right) + z_p \right] - 1 \right) = 0 \qquad (32)$$

Constraint 3: Decide if a candidate site is selected

To facilitate the computation of SNR values, we need to first decide if a given candidate site $s$ with a specific modulo degree $d$ is selected or not. This is achieved by the same penalty term (19) as before.

Constraint 4: Restriction of selected candidate sites

Remember that as a result of the optimization, a site containing a specific number of antennas (at specific angles) is built at each of the selected candidate sites. It is economically beneficial to restrict the total number of sites to be built in the entire network, provided we can provide high DLR/SNR values to the pixels. Therefore, it makes sense to control the number of selected candidate sites.

Constraint 4a: Specified range of candidate sites

As one example, we can restrict the number of selected sites within a minimum and maximum value. Suppose, the minimum number of desired selected sites is $S_{min}$, and the maximum number of desired candidates sites is $S_{max}$. Then one can implement this requirement with the help of a two-sided inequality containing the $y_s^d$ binary decision bits. Formally, this can be written as:

$$\texttt{Inequality\_sites} \equiv S_{min} \leq \sum_{\forall s \in S} \sum_{\forall d \in D} y_s^d \leq S_{max} . \qquad (33)$$

While the above is not a QUBO term, such simple inequality constraints on the binary decision variables can be automatically transformed into corresponding QUBO constraints by the Version 3 of Fujitsu Digital Annealer. For older versions or other systems, such inequality can be expressed by means of further QUBO penalty terms based on further decision variables.

Constraint 4b: Exact number of candidate sites

It can also be desirable to select a pre-defined number of candidate sites. Say, the desired number candidate site is $S_{num}$, we can enforce this requirement using the following QUBO term.

$$H_{number\_sites} = \left( \sum_{\forall s \in S} \sum_{\forall d \in D} y_s^d - S_{num} \right)^2 = 0 \qquad (34)$$

In the described implementation, one needs to select either Constraint 4a or Constraint 4b.

Formulating the objective function: SNR Optimization

Equations (23) to (27) provided above for the SNR terms for the candidate sites and the fixed sites remain the same. In the definition of the respective SNR terms for fixed sites of equations (28) above, the new bit variable $z_p$ is used:

$$\texttt{SNR\_fixed}(p) \qquad (35)$$

$$= \left[ \text{DLR\_F}_p^* - 10 \cdot log_{10} \left( \text{load} \cdot \sum_{\forall s \in S} \sum_{\forall d \in D} \sum_{\forall a \in A} \text{DLR\_W}_{(p,s,a,d)} \cdot y_s^d \right. \right.$$

$$\left. \left. + \text{load} \cdot \sum_{\forall f' \in S_f} \sum_{\substack{\forall d_f' \in D_{f'} \\ (f', d_f') \neq (f_p^*, d_{f_p}^*)}} \text{DLR\_W\_F}_{(p, f', d_f')} \right) \right] \cdot z_p$$

Based on the same considerations as above, with log manipulation we can write SNR_fixed(p) in QUBO form.

The objective QUBO term for the problem can be stated as below:

$$H_{\text{SNR}} = \sum_{\forall p \in P} \sum_{\forall s \in S} \sum_{\forall d \in D} \left( \left( load \cdot \sum_{\forall s' \in S} \sum_{\forall d' \in D} \sum_{\substack{\forall a' \in A \\ (s, a^*_{p,s,d}) \neq (s', a')}} \frac{\text{DLR\_W}_{(p,s',a',d')}}{10^{\text{DLR}^*_{(p,s,d)}/10}} \cdot y^{d'}_{s'} \right) \right. \tag{36}$$

$$+ \left( load \cdot \sum_{\forall f \in S_f} \sum_{\forall d_f \in D_f} \frac{\text{DLR\_W\_F}_{(p,f,d_f)}}{10^{\text{DLR}^*_{(p,s,d)}/10}} \right) - 10^{-SNRTh/10} \left. \right) \cdot b^d_{p,s}$$

$$+ \sum_{\forall p \in P} \left( \left( load \cdot \sum_{\forall s \in S} \sum_{\forall d \in D} \sum_{\forall a \in A} \frac{\text{DLR\_W}_{(p,s,a,d)}}{10^{\frac{\text{DLR\_F}^*_{(p)}}{10}}} \cdot y^d_s \right) \right.$$

$$+ \left( load \cdot \sum_{\forall f' \in S_f} \sum_{\substack{\forall d'_f \in D_{f'} \\ (f', d'_f) \neq (f^*_p, d^*_{f_p})}} \frac{\text{DLR\_W\_F}_{(p,f',d'_f)}}{10^{\text{DLR\_F}^*_{(p)}/10}} \right) - 10^{-SNRTh/10} \left. \right) \cdot z_p$$

Complete QUBOs

Case 1: No restriction on Number of Candidate Sites

$$HQ = w_A \cdot H_{\texttt{allowed\_degrees}} + w_B \cdot H_{\texttt{one\_best\_server}} + w_C \cdot H_{\text{chosen}} + w_D \cdot H_{\text{SNR}}. \tag{37}$$

Case 2: Restricted number of Candidate Sites

$$HQ = w_A \cdot H_{\texttt{allowed\_degrees}} + w_B \cdot H_{\texttt{one\_best\_server}} + w_C \cdot H_{\text{chosen}} + w_E \cdot H_{\texttt{range}} + \tag{38}$$

$$w_D \cdot H_{\text{SNR}},$$

wherein $H_{\text{range}}$ is defined such that inequality (33) is satisfied. As detailed above, this constraint can be formulated automatically by Version 3 of Fujitsu's Digital Annealer.

Case 3: Specific Number of Candidate Sites

$$HQ = w_A \cdot H_{\texttt{allowed\_degrees}} + w_B \cdot H_{\texttt{one\_best\_server}} + w_C \cdot H_{\text{chosen}} + w_E \cdot \tag{39}$$

$$H_{\texttt{number\_sites}} + w_D \cdot H_{\text{SNR}}.$$

$w_A, w_B, w_C, w_D$ and $w_E$ are respective QUBO penalty weights. In the described embodiments, the penalty weights $w_A, w_B, w_C$ and $w_E$ are chosen to implement the respective QUBO terms as hard constraints.

Formulation of the fifth QUBO

In this formulation we assume the alternative constraint that each new site, which is built, contains two or three of antennas with even separation, i.e. three antenna spaced at 120° or two antennas spaced at 180°. This can be combined with any of the previous approaches. More generally, any number of antennas per site, e.g. 4 or more antenna per candidate site, may be treated in a similar manner.

As in the previous QUBO formulations, we need to find the best server site and antenna along with its degree for each pixel, provided that the pixel is covered. Therefore, we again define binary variables $b_{p,s,2}^d$ and $b_{p,s,3}^d$ for each pixel $p \in P$, $s \in S$ and modulo degree $d \in D$, such that

$$b_{p,s,2}^d := \begin{cases} \text{fixed as } 0, & \text{if (3) or (4) is violated for each antenna for site s with two antennas,} \\ 1, & \text{if any antenna of site s with modulo degree is the best server antenna for pixel p,} \\ 0, & \text{otherwise.} \end{cases}$$

and

$$b_{p,s,3}^d := \begin{cases} \text{fixed as } 0, & \text{if } d \geq 120 \text{ or if (3) or (4) is violated for each antenna for site s with three antennas,} \\ 1, & \text{if any antenna of site s with modulo degree is the best server antenna for pixel p,} \\ 0, & \text{otherwise.} \end{cases}$$

We concretely define the constant bits as follows:

For all the antennas of site $s$, we take all bits $b_{p,s,2}^d = 0$, if for pixel $p$ all DLR-values of site s with modulo degree d and two antennas are less than DLTh or if the respective ULR values are less than the threshold ULTh. Similarly, we take all bits $b_{p,s,3}^d = 0$, if for pixel $p$ all DLR-values of site s with modulo degree d and three antennas are less than downlink threshold value DLTh or if the respective ULR values are less than the uplink threshold value ULTh.

As before, all the fixed sites are already present in the network with pre-defined antennas and angles. Additionally, if a cell is built at a candidate site $s$ at a modulo degree $d$, we can compute the maximal DLR values $\mathrm{DLR}_{p,s,d,2}^*$ and $\mathrm{DLR}_{p,s,d,3}^*$ offered by this ($s$, $d$) pair for the options with two and three antennas and for each pixel $p$. Suppose $\mathrm{DLR\_F}_p^*$ be the best DLR value offered to pixel $p$ from all the fixed sites, and let $f_p^*$ be the best fixed site for pixel $p$. If, however, $\mathrm{DLR}_{p,s,d,2}^* < \mathrm{DLR\_F}_p^*$ and $\mathrm{DLR}_{p,s,d,3}^* < \mathrm{DLR\_F}_p^*$, then we can certainly claim that for pixel $p$ the best server cannot be at candidate-site $s$ at modulo degree $d$, rather at fixed site $f_p^*$. This implies $b_{p,s,2}^d$ and $b_{p,s,3}^d$ can be set to a constant 0.

In the process, we need to take care of the threshold values DLTh and ULTh for DLR and ULR, respectively.

The complete description of the b-bits can be formally stated as follows.

$$b_{p,s,2}^d := \begin{cases} \text{fixed as } 0, & \text{if (3) or (4) is violated for each antenna for site } s \text{ with two antennas,} \\ \text{fixed as } 0, & \text{if } \mathrm{DLR}_{p,s,d,2}^* < \mathrm{DLR\_F}_p^*, \\ 1, & \text{if any antenna } a \text{ of site } s \text{ with module degree } d \text{ for two antenna is BSA for pixel } p, \\ 0, & \text{otherwise.} \end{cases}$$

$$b_{p,s,3}^d := \begin{cases} \text{fixed as } 0, & \text{if } d \geq 120 \text{ or if (3) or (4) is violated for each antenna for site } s \text{ with three antennas,} \\ \text{fixed as } 0, & \text{if } \mathrm{DLR}_{p,s,d,3}^* < \mathrm{DLR\_F}_p^*, \\ 1, & \text{if any antenna } a \text{ of site } s \text{ with module degree } d \text{ for three antenna is BSA for pixel } p, \\ 0, & \text{otherwise.} \end{cases}$$

Based on equations (30) and (31), the bit variable $z_p$ is defined as above.

Constraint 1: Allowed degrees for antennas on a site

As before, any site can only be built in one configuration. Hence, the modulo degree of a site has to coincide for all pixels. This can be enforced by the following constraint:

$$H_{\texttt{allowed\_degrees}} = \sum_{\forall s \in S} \sum_{\forall d_1 \in D} \sum_{\forall d_2 \in D \backslash \{d_1\}} \left( \sum_{\forall p \in P} b_{p,s,2}^{d_1} + b_{p,s,3}^{d_1} \right) \cdot \left( \sum_{\forall p \in P} b_{p,s,2}^{d_2} + b_{p,s,3}^{d_1} \right) = 0 \qquad (40)$$

Constraint 2: Maximum one best server for any pixel

As before, any pixel can have at most one best server. This condition is satisfied by the following penalty QUBO term:

$$H_{\texttt{one\_best\_server}} = \sum_{\forall p \in P} \left( \left( \left( \sum_{\forall s \in S} \sum_{\forall d \in D} b_{p,s,2}^{d_1} + b_{p,s,3}^{d_1} \right) + z_p \right) \cdot \left( \left[ \left( \sum_{\forall s \in S} \sum_{\forall d \in D} b_{p,s,2}^{d_1} + b_{p,s,3}^{d_1} \right) + z_p \right] - 1 \right) \right) = 0 \qquad (41)$$

As before, in order to express the SNR value for a pixel, we first need to introduce a second set of binary variables. For $s \in S$ and $d \in D$, we define

$$y_{s,2}^d := \begin{cases} 1, & \text{if any antenna } a \text{ of site } s \text{ with two antennas is the BSA for any pixel,} \\ 0. & \text{otherwise.} \end{cases}$$

and

$$y_{s,3}^d := \begin{cases} 1, & \text{if any antenna } a \text{ of site } s \text{ with three antennas is the BSA for any pixel,} \\ 0. & \text{otherwise.} \end{cases}$$

Together, $b_{p,s,2}^d$, $b_{p,s,3}^d$, $y_s^d$ and $z_p$ represent the complete problem formulation as a QUBO.

Constraint 3a: Decide if a candidate site is built with zero, two or three antennas

For each candidate site, we need to decide if it is built at all and if so, if it is built with two or three antennas. This exclusive choice can be enforced by

$$H_{\texttt{two\_or\_three}} = \sum_{\forall s \in S} \left( \sum_{\forall d \in D} \left( y_{s,2}^d + y_{s,3}^d \right) - 1 \right) \sum_{\forall d \in D} \left( y_{s,2}^d + y_{s,3}^d \right) = 0 \qquad (42)$$

Constraint 3b: Decide if a candidate site is selected

To facilitate the computation of SNR values, we need to first decide if a given candidate site s with a specific modulo degree $d$ is selected or not. This is achieved by the following penalty term:

$$H_{\texttt{chosen}} = \sum_{\forall s \in S} \sum_{\forall d \in D} \left( 1 - y_{s,2}^d \right) \left( \sum_{\forall p \in P} b_{p,s,2}^d \right) + \sum_{\forall s \in S} \sum_{\forall d \in D} \left( 1 - y_{s,3}^d \right) \left( \sum_{\forall p \in P} b_{p,s,3}^d \right) = 0 \qquad (43)$$

Constraint 4: Restriction of selected candidate sites

As before, it is economically beneficial to restrict the total number of servers to be built in the entire network, provided we can provided good DLR/SNR values to the required pixels. Therefore, it makes sense to regulate the number of selected candidate sites.

Constraint 4a: Specified range of candidate sites

As one example, we can restrict the number of selected sites within a minimum and maximum value. Suppose, the minimum number of desired selected sites in $S_{min}$, and the maximum number of desired candidate sites is $S_{max}$, one can implement this requirement using an inequality with the help of $y_{s,2}^d$ and $y_{s,3}^d$ binary bits. Formally, this can be written as:

$$\texttt{Inequality\_sites} \equiv S_{min} \leq \sum_{\forall s \in S} \sum_{\forall d \in D} \left( y_{s,2}^d + y_{s,3}^d \right) \leq S_{max}. \qquad (44)$$

As above, such simple inequality constraints on the binary decision variables can be automatically transformed into corresponding QUBO constraints.

Constraint 4b: Exact number of candidate sites

It can also be desirable to select a pre-defined number of candidate sites. Say, the desired number candidate site is $S_{num}$, we can enforce this requirement using the following QUBO term:

$$H_{number\_sites} = \left( \sum_{\forall s \in S} \sum_{\forall d \in D} \left( y_{s,2}^d + y_{s,3}^d \right) - S_{num} \right)^2 = 0 \qquad (45)$$

In the described implementation, one needs to select either Constraint 4a or Constraint 4b.

Formulating the objective function: SNR Optimization

Similarly as described above, we now define the maximum DLR value on a pixel from a (candidate or fixed) site, along with the corresponding best angle. The maximum DLR value from a fixed site has already been defined in (25) and (26) above.
For the candidate sites, with $A_2 = \{0,1\}$ and $A_3 = \{0,1,2\}$, we further define:

$$a_{(p,s,d,2)}^* = \underset{\substack{\forall a \in A_2, \ s.t. \\ \texttt{ULR}_{(p,s)}^{(180 \cdot a + d)} > \texttt{ULTh}, \\ \texttt{DLR}_{(p,s)}^{(180 \cdot a + d)} > \texttt{DLTh},}}{\texttt{argmax}} \left\{ \texttt{DLR}_{(p,s)}^{(180 \cdot a + d)} \right\} \quad \texttt{given}\, p, s, d \qquad (46)$$

$$\texttt{DLR}_{(p,s,d,2)}^* = \underset{\substack{\forall a \in A_2, \ s.t. \\ \texttt{ULR}_{(p,s)}^{(180 \cdot a + d)} > \texttt{ULTh}, \\ \texttt{DLR}_{(p,s)}^{(180 \cdot a + d)} > \texttt{DLTh}}}{\texttt{max}} \left\{ \texttt{DLR}_{(p,s)}^{(180 \cdot a + d)} \right\} \quad \texttt{given}\, p, s, d \qquad (47)$$

$$a_{(p,s,d,3)}^* = \underset{\substack{\forall a \in A_3, \ s.t. \\ \texttt{ULR}_{(p,s)}^{(120 \cdot a + d)} > \texttt{ULTh}, \\ \texttt{DLR}_{(p,s)}^{(120 \cdot a + d)} > \texttt{DLTh},}}{\texttt{argmax}} \left\{ \texttt{DLR}_{(p,s)}^{(120 \cdot a + d)} \right\} \quad \texttt{given}\, p, s, d \qquad (48)$$

$$\texttt{DLR}_{(p,s,d,3)}^* = \underset{\substack{\forall a \in A_3, \ s.t. \\ \texttt{ULR}_{(p,s)}^{(120 \cdot a + d)} > \texttt{ULTh}, \\ \texttt{DLR}_{(p,s)}^{(120 \cdot a + d)} > \texttt{DLTh}}}{\texttt{max}} \left\{ \texttt{DLR}_{(p,s)}^{(120 \cdot a + d)} \right\} \quad \texttt{given}\, p, s, d \qquad (49)$$

SNR term if candidate site is chosen:

As above, with the help of the above definitions, we can now formulate the total SNR value on any given pixel p, such that the pixel p selected a candidate site at some modulo degree d, as its best server.

$$
\begin{aligned}
\text{SNR}(p) = \sum_{\forall s \in S} \sum_{\forall d \in D} \Bigg[ & \text{DLR}^*_{(p,s,d,2)} - 10 \cdot \log_{10}\Bigg( \text{load} \cdot \sum_{\forall s' \in S} \sum_{\forall d' \in D} \Bigg( \sum_{\substack{\forall a' \in A_2 \\ (s,a^*_{(s,d,p,2)}) \neq (s',a')}} \text{DLR\_W}_{(p,s',a',d',2)} \cdot y^{d'}_{s',2} \\
& + \sum_{\substack{\forall a' \in A_3 \\ (s,a^*_{(s,d,p,2)}) \neq (s',a')}} \text{DLR\_W}_{(p,s',a',d',3)} \cdot y^{d'}_{s',3} \Bigg) + \text{load} \cdot \sum_{\forall f \in S_f} \sum_{\forall d_f \in D_f} \text{DLR\_W\_F}_{(p,f,d_f)} \Bigg) \Bigg] \cdot b^d_{p,s,2} \\
& + \sum_{\forall s \in S} \sum_{\forall d \in D} \Bigg[ \text{DLR}^*_{(p,s,d,3)} - 10 \\
& \cdot \log_{10}\Bigg( \text{load} \cdot \sum_{\forall s' \in S} \sum_{\forall d' \in D} \Bigg( \sum_{\substack{\forall a' \in A_2 \\ (s,a^*_{s,d,p,3}) \neq (s',a')}} \text{DLR\_W}_{(p,s',a',d',2)} \cdot y^{d'}_{s',2} \\
& + \sum_{\substack{\forall a' \in A_3 \\ (s,a^*_{(s,d,p,3)}) \neq (s',a')}} \text{DLR\_W}_{(p,s',a',d',3)} \cdot y^{d'}_{s',3} \Bigg) + \text{load} \cdot \sum_{\forall f \in S_f} \sum_{\forall d_f \in D_f} \text{DLR\_W\_F}_{(p,f,d_f)} \Bigg) \Bigg] \cdot b^d_{p,s,3}
\end{aligned} \tag{50}
$$

SNR term if fixed site is chosen:

Similarly, the total SNR value on any given pixel p, such that the pixel p selected a fixed site as its best server is

$$
\begin{aligned}
\text{SNR\_fixed}(p) & \\
= \Bigg[ & \text{DLR\_F}^*_p - 10 \cdot \log_{10}\Bigg( \text{load} \cdot \sum_{\forall s \in S} \sum_{\forall d \in D} \Bigg( \sum_{\forall a \in A_2} \text{DLR\_W}_{(p,s,a,d,2)} \cdot y^d_{s,2} \\
& + \sum_{\forall a \in A_3} \text{DLR\_W}_{(p,s,a,d,3)} \cdot y^d_{s,3} \Bigg) + \text{load} \cdot \sum_{\forall f' \in S_f} \sum_{\substack{\forall d'_f \in D_{f'} \\ (f',d'_f) \neq (f^*_p, d^*_{fp})}} \text{DLR\_W\_F}_{(p,f',d'_f)} \Bigg) \Bigg] \cdot z_p
\end{aligned} \tag{51}
$$

Based on the same considerations as above, with log manipulation we can write SNR_fixed(p) in QUBO form.

The objective QUBO term for the problem can be stated as below:

$$(52)$$

$$H_{SNR} = \sum_{\forall p \in P} \sum_{\forall s \in S} \sum_{\forall d \in D} \Bigg( \Bigg( load$$

$$\cdot \sum_{\forall s\prime \in S} \sum_{\forall d\prime \in D} \Bigg( \sum_{\substack{\forall a\prime \in A_2 \\ (s,a^*_{(p,s,d,2)}) \neq (s\prime,d\prime)}} \frac{DLR\_W_{(p,s\prime,a\prime,d\prime,2)}}{10^{DLR^*_{(p,s,d,2)}/10}} \cdot y^{d\prime}_{s\prime,2} + \sum_{\forall a\prime \in A_3} \frac{DLR\_W_{(p,s\prime,a\prime,d\prime,3)}}{10^{DLR^*_{(p,s,d,2)}/10}} \cdot y^{d\prime}_{s\prime,3} \Bigg) \Bigg)$$

$$+ \Bigg( load \cdot \sum_{\forall f \in S_f} \sum_{\forall d_f \in D_f} \frac{DLR\_W\_F_{(p,f,d_f)}}{10^{DLR^*_{(p,s,d,2)}/10}} \Bigg) - 10^{-SNRTh/10} \Bigg) \cdot b^d_{p,s,2}$$

$$+ \sum_{\forall p \in P} \sum_{\forall s \in S} \sum_{\forall d \in D} \Bigg( \Bigg( load$$

$$\cdot \sum_{\forall s\prime \in S} \sum_{\forall d\prime \in D} \Bigg( \sum_{\forall a\prime \in A_3} \frac{DLR\_W_{(p,s\prime,a\prime,d\prime,2)}}{10^{DLR^*_{(p,s,d,3)}/10}} \cdot y^{d\prime}_{s\prime,2} + \sum_{\substack{\forall a\prime \in A_3 \\ (s,a^*_{(p,s,d,3)}) \neq (s\prime,d\prime)}} \frac{DLR\_W_{(p,s\prime,a\prime,d\prime,3)}}{10^{DLR^*_{(p,s,d,3)}/10}} \cdot y^{d\prime}_{s\prime,3} \Bigg) \Bigg)$$

$$+ \Bigg( load \cdot \sum_{\forall f \in S_f} \sum_{\forall d_f \in D_f} \frac{DLR\_W\_F_{(p,f,d_f)}}{10^{DLR^*_{(p,s,d,3)}/10}} \Bigg) - 10^{-SNRTh/10} \Bigg) \cdot b^d_{p,s,3}$$

$$+ \sum_{\forall p \in P} \Bigg( \Bigg( load \cdot \sum_{\forall s \in S} \sum_{\forall d \in D} \Bigg( \sum_{a \in A_2} \frac{DLR\_W_{(p,s,a,d,2)}}{10^{DLR\_F^*_{(p)}/10}} \cdot y^d_{s,2} + \sum_{a \in A_3} \frac{DLR\_W_{(p,s,a,d,3)}}{10^{DLR\_F^*_{(p)}/10}} \cdot y^d_{s,3} \Bigg) \Bigg)$$

$$+ \Bigg( load \cdot \sum_{\forall f\prime \in S_f} \sum_{\substack{\forall d\prime_f \in D_{f\prime} \\ (f\prime,d\prime_f) \neq (f^*_p,d^*_{f_p})}} \frac{DLR\_W\_F_{(p,f\prime,d\prime_f)}}{10^{DLR\_F^*_{(p)}/10}} \Bigg) - 10^{-SNRTh/10} \Bigg) \cdot z_p$$

## Complete QUBOs

Case 1: No restriction on Number of Candidate Sites

$$HQ = w_A \cdot H_{\text{allowed\_degrees}} + w_B \cdot H_{\text{one\_best\_server}} + w_F \cdot H_{\text{two\_or\_three}} + \qquad (53)$$

$$w_C \cdot H_{\text{chosen}} + w_D \cdot H_{\text{SNR}}.$$

Case 2: Restricted number of Candidate Sites

$$HQ = w_A \cdot H_{\text{allowed\_degrees}} + w_B \cdot H_{\text{one\_best\_server}} + w_E \cdot H_{\text{range}} + w_F \qquad (54)$$

$$\cdot H_{\text{two\_or\_three}} + w_C \cdot H_{\text{chosen}} + w_D \cdot H_{\text{SNR}}$$

wherein $H_{\text{range}}$ is defined such that inequality (44) is satisfied. As detailed above, this constraint can be formulated automatically by Version 3 of Fujitsu's Digital Annealer.

Case 3: Specific Number of Candidate Sites

$$HQ = w_A \cdot H_{\text{allowed\_degrees}} + w_B \cdot H_{\text{one\_best\_server}} + w_F \cdot H_{\text{two\_or\_three}} + w_C \quad (55)$$
$$\cdot H_{\text{chosen}} + w_E \cdot H_{\text{number\_sites}} + w_D \cdot H_{\text{SNR}}$$

$w_A$, $w_B$, $w_C$, $w_D$, $w_E$ and $w_F$ are respective QUBO penalty weights. In the described embodiments, the penalty weights $w_A$, $w_B$, $w_C$, $w_E$ and $w_F$ are chosen to implement the respective QUBO terms as hard constraints.

Formulation of the sixth QUBO

The sixth QUBO builds on several of the previously approaches for formulating an objective function and associated constraints in a manner amendable for a quantum concept processor in general and a digital annealer in particular. It combines these approaches with the observations of the first part that at most one site from a set of best server candidate should be built. This allows for a particularly compact representation of the QUBO with a reduced number of binary decision variables. In consequence, the sixth QUBO is particularly useful for optimizing reception based on a larger number of candidate sites and pixels.

In this formulation we assume for simplicity once more that each site is built with three antennas as detailed above with respect to the second to fourth QUBO. The formulation with two or three antennas at a site can be formulated similar as detailed above with respect to the fifth QUBO.

As in the previous QUBO formulations, we need to decide which site is the best server site and antenna along with its degree for each pixel, provided that the pixel is covered. In the previous approaches, this assignment was achieved by the binary variables $b_{p,s}^d$ for each pixel $p \in P$, $s \in 5$ and $d \in D$.

In order to keep the problem size small and allow for the optimization of bigger data sets, we save those bits in this formulation. For each candidate site $s \in S$ and modulo degree $d \in D$, we define the following binary decision variables

$$y_s^d := \begin{cases} 1, & \text{if site s is built with modulo degree d,} \\ 0, & \text{otherwise.} \end{cases}$$

Attention is drawn to the fact that the binary decision variables $y_s^d$ are associated with each of the candidate sites. That is to say that the number of required binary decision variables $y_s^d$ grows linearly with the number of considered new sites rather than with the number of considered pixels $p$.

Definition of maximum DLR values:

Similar to equations (23) and (24), we define for each pixel $p \in P$, $s \in S$ and $d \in D$

$$a_{(p,s,d)}^* = \underset{\substack{a \in A: \text{ULR}_{(p,s)}^{(120 \cdot a + d)} \geq \text{ULTh}, \\ \text{DLR}_{(p,s)}^{(120 \cdot a + d)} > \text{DLTh}}}{\arg\max} \left\{ \text{DLR}_{(p,s)}^{(120 \cdot a + d)} \right\} \quad (56)$$

$$\text{DLR}_{(p,s,d)}^* = \underset{\substack{a \in A: \text{ULR}_{(p,s)}^{(120 \cdot a + d)} \geq \text{ULTh}, \\ \text{DLR}_{(p,s)}^{(120 \cdot a + d)} > \text{DLTh},}}{\max} \left\{ \text{DLR}_{(p,s)}^{(120 \cdot a + d)} \right\} \quad (57)$$

Definition of best server candidate set:

For a user specific threshold $t \in (0,1]$ and a pixel $p \in P$ we define the following best server candidate sets $B_p$:

$$\left(s_p^*, d_p^*\right) := \underset{(s,d) \in S \times D}{\operatorname{argmax}} \left\{ \mathrm{DLR}_{(p,s)}^d \right\} . \tag{58}$$

$$B_p := \left\{ (s,d) \in S \times D : \frac{\mathrm{DLR}_{(p,s)}^d - \mathrm{DLTh}}{\mathrm{DLR}_{(p,s_p^*)}^{d_p^*} - \mathrm{DLTh}} \geq t \right\} \tag{59}$$

The threshold t indicates the margin of the DLR value $\mathrm{DLR}_{(p,s)}^d$ of a selected server candidates above the threshold value **DLTh** with respect to the respective margin of the best possible DLR value DLR $\mathrm{DLR}_{(p,s_p^*)}^{d_p^*}$ . In the designed prototype, *t* can be varied. Good results have been obtained for *t* from the range between 0.5 and 0.8.

For the sixth QUBO, we assume that at most one site from each best server candidate set $B_p$ should be built. As detailed in the first part of the specification, the heuristics behind this is that, if two sites with a high DLR value for the pixel are built simultaneously, the one with the (slightly) lower DLR value would interfere strongly with the other one, so that the SNR value for the pixel would be lowered drastically.

As before, we also need to incorporate the already built (fixed) sites in the network. Each fixed site consists of 1, 2 or 3 antennas at some pre-determined angles (degrees). Let $f \in S_f$ denote a fixed site, where $S_f$ are all the fixed sites. Moreover, let $d_f \in D_f$ be the angles of all the antennas on a fixed site f. Note that $D_f$ contains more than one angle, where each angle corresponds to a specific antenna on the fixed-site *f*.

These fixed sites can act as a best server for the required pixels, as well as cause interference.

Hence, for each pixel $p \in P$ we define the best DLR value offered to pixel p from all the fixed sites, and define the corresponding fixed site along with the degree of the antenna which delivers the best DLR value:

$$\mathrm{DLR\_F}_p^* = \max_{\substack{(f,d_f): f \in S_f, d_f \in S_f, \ \mathrm{ULR}_{(p,f)}^{d_f} \geq \mathrm{ULTh}, \\ \mathrm{DLR}_{(p,f)}^{d_f} > \mathrm{DLTh},}} \mathrm{DLR}_{(p,f)}^{d_f} \tag{60}$$

$$(f_p^*, d_{f_p^*}^*) = \underset{\substack{(f,d_f): f \in S_f, d_f \in S_f, \mathrm{ULR}_{(p,f)}^{d_f} \geq \mathrm{ULTh}, \\ \mathrm{DLR}_{(p,f)}^{d_f} > \mathrm{DLTh}}}{\operatorname{argmax}} \mathrm{DLR}_{(p,f)}^{d_f} \tag{61}$$

Moreover, as in the fourth QUBO, we define best server bits with regard to fixed sites:

$$z_p := \begin{cases} \text{fixed as } 0, & \text{if } \mathrm{DLR\_F}_p^* \text{ and } \mathrm{ULR\_F}_{p,f_p^*,d_{f_p^*}^*} \text{ are less than the required threshold values for pixel } p, \\ 1, & \text{if a pixel has fixed site } f_p^* \text{ as its best server site,} \\ 0, & \text{otherwise.} \end{cases}$$

Attention is drawn to the fact that the binary decision variables $z_p$ are associated with each of the pixels. That is to say that the number of required binary decision variables $z_p$ grows linearly with the number of considered pixels.

Constraint 1: Most one modulo degree for a site

As before, any site can only be built in one configuration. Hence, only one modulo degree can be chosen for each site. Using the new set of binary decision variables $y_s^d$ , this can be enforced by the following constraint:

$$H_{\text{allowed\_degrees}} = \sum_{s \in S} \left(-1 + \sum_{d \in D} y_s^d\right) \cdot \sum_{d \in D} y_s^d = 0 \tag{62}$$

Constraint 2: Maximum one best server for any pixel

As before, any pixel can have at most one best server. Note that a pixel can select its best server either from the candidate sites or from the fixed sites. Using the new set of binary decision variables $y_s^d$, this condition can be enforced by the following penalty QUBO term:

$$H_{\text{one\_best\_server}} = \sum_{p \in P} \left(-1 + z_p + \sum_{(s,d) \in B_p} y_s^d\right) \cdot \left(z_p + \sum_{(s,d) \in B_p} y_s^d\right) = 0 \tag{63}$$

Note that the above conditions alleviate the need for constraints 3a and 3b of the fifth QUBO.

Constraint 3: Restriction of selected candidate sites

As detailed before, it is economically beneficial to restrict the total number of servers to be built in the entire network, provided we can achieve good DLR/SNR values for all/most pixels. Therefore, it makes sense to regulate the number of selected candidate sites.

Constraint 3a: Specified range of candidate sites

As one example, we can restrict the number of selected sites between a minimum and maximum value. Suppose, the minimum number of desired selected sites is $S_{\text{min}}$, and the maximum number of desired candidates sites is $S_{\text{max}}$. Then one can implement this requirement with the help of a two-sided inequality containing the $y_s^d$ binary bits. Formally, this can be written as previously defined in equation (33), repeated below:

$$\text{Inequality\_sites} \equiv S_{min} \leq \sum_{s \in S} \sum_{d \in D} y_s^d \leq S_{max}. \tag{33}$$

Constraint 3b: Exact number of candidate sites

It can also be desirable to select a pre-defined number of candidate sites. Say, the desired number of candidate sites is $S_{\text{num}}$. We can enforce this requirement using the QUBO term previously defined in equation (34), repeated below:

$$H_{number\_sites} = \left(\sum_{\forall s \in S} \sum_{\forall d \in D} y_s^d - S_{num}\right)^2 = 0 \tag{34}$$

In the described implementation, one needs to select either Constraint 3a or Constraint 3b.

Formulating the objective function: SNR Optimization

The target to minimize the SNR value of all pixels is achieved by minimizing a similar QUBO as in the previous approaches with the difference that we do not determine the best server of a pixel $p \in P$ by the bits $b_{p,s'}^d$, $s \in S, d \in D,$ but rather by that bit $y_s^d$ with $(s, d) \in B_p$ which is one. Moreover, interference from candidate sites can only come from candidate sites $(s', d'') \in \overline{B}_p$ with $y_{s'}^{d'} = 1$, = 1, wherein $B_p$ represents the complement of $B_p$, i.e. $(S \times D) \backslash B_p$, and

antennas of the site (s,d) which are not the BSA.

Based on the same considerations as above, the log manipulated optimization target looks as follows:

$$H_{\text{SNR}} = \sum_{p \in P} \sum_{(s,d) \in B_p} y_s^d \cdot \left( \sum_{(s',d') \in \overline{B}_p \cup \{(s,d)\}} \sum_{\substack{a' \in A, \ s.t. \\ (s',a') \neq \left(s, a^*_{(p,s,d)}\right)}} \text{load} \cdot \frac{\text{DLR\_W}_{(p,s',a',d')}}{10^{\frac{\text{DLR}^*_{(p,s,d)}}{10}}} y_{s'}^{d'} \right. \tag{64}$$

$$+ \sum_{f \in S_f} \sum_{d_f \in D_f} \text{load} \cdot \frac{\text{DLR\_W\_F}_{(p,f,d_f)}}{10^{\text{DLR}^*_{(p,s,d)}/10}} - 10^{-\text{SNRTh}/10} \Bigg)$$

$$+ \sum_{p \in P} z_p \cdot \sum_{(s,d) \in \overline{B}_p} \sum_{a \in A} \left( load \cdot \frac{\text{DLR\_W}_{(p,s,a,d)}}{10^{\text{DLR\_F}^*_{(p)}/10}} y_s^d \right.$$

$$+ \sum_{f' \in S_f} \sum_{\substack{d_{f'} \in D_{f'}, s.t. \\ (f',d_{f'}) \neq (f^*_p, d^*_{f_p})}} \text{load} \cdot \frac{\text{DLR\_W\_F}_{(p,f',d_{f'})}}{10^{\text{DLR\_F}^*_{(p)}/10}} - 10^{-\text{SNRTh}/10} \Bigg)$$

From a physical perspective, the first two terms in the first bracket represent the interference affecting a selected candidate site originating from the other selected candidate sites and fixed antennas with respect to the signal reception strength, respectively. The first two terms of the second bracket represent the interference affecting a fixed site selected as best server antenna originating from the selected candidate sites and other fixed antennas with respect to the signal reception strength, respectively. The remaining terms -10$^{-\text{SNRTh}/10}$ of each expression are fixed and enforce that a site with a configuration is only chosen as a best server site for a pixel if the threshold SNRTh is exceeded for that pixel. In the latter case, the bracket attains a value smaller than zero which is valuable for H_SNR. If the SNR value at the pixel is smaller than SNRTh, the bracket attains a value larger than zero which implies a penalty if the variable in front of the bracket is one. Note that for each pixel p, at most one of the two brackets makes a contribution to the overall Hamiltonian.

Note that in absence of any pre-existing, fixed antennas, i.e. $S_f = \varnothing$, the second term of the first bracket and the entire second bracket term become zero, and can be omitted. Thus, in this simplified case applicable to green field planning, the objective function becomes:

$$H_{\text{SNR}} = \sum_{p \in P} \sum_{(s,d) \in B_p} y_s^d \tag{65}$$

$$\cdot \left( \sum_{(s',d') \in \overline{B}_p \cup \{(s,d)\}} \sum_{\substack{a' \in A, \ s.t. \\ (s',a') \neq \left(s, a^*_{(p,s,d)}\right)}} \text{load} \cdot \frac{\text{DLR\_W}_{(s',d',a',p)}}{10^{\frac{\text{DLR}^*_{(s,d,p)}}{10}}} y_{s'}^{d'} - 10^{-\text{SNRTh}/10} \right)$$

Complete QUBOs

Case 1: No Restriction on Number of Candidate Sites

$$HQ = w_A \cdot H_{\text{allowed\_degrees}} + w_B \cdot H_{\text{one\_best\_server}} + w_D \cdot H_{\text{SNR}}. \tag{66}$$

Case 2: Restricted number of Candidate Sites

$$HQ = w_A \cdot H_{\texttt{allowed\_degrees}} + w_B \cdot H_{\texttt{one\_best\_server}} + w_D \cdot H_{\texttt{SNR}} \qquad (67)$$

such that inequality (33) is satisfied.

Case 3: Specific Number of Candidate Sites

$$HQ = w_A \cdot H_{\texttt{allowed\_degrees}} + w_B \cdot H_{\texttt{one\_best\_server}} + w_C \cdot H_{\texttt{number\_sites}} + \qquad (68)$$

$$w_D \cdot H_{\texttt{SNR}}.$$

$w_A$, $w_B$, $w_C$ and $w_D$ are respective QUBO penalty weights. In the described embodiments, the penalty weights $w_A$, $w_B$ and $w_C$ are chosen to implement the respective QUBO terms as hard constraints.

Optimization results

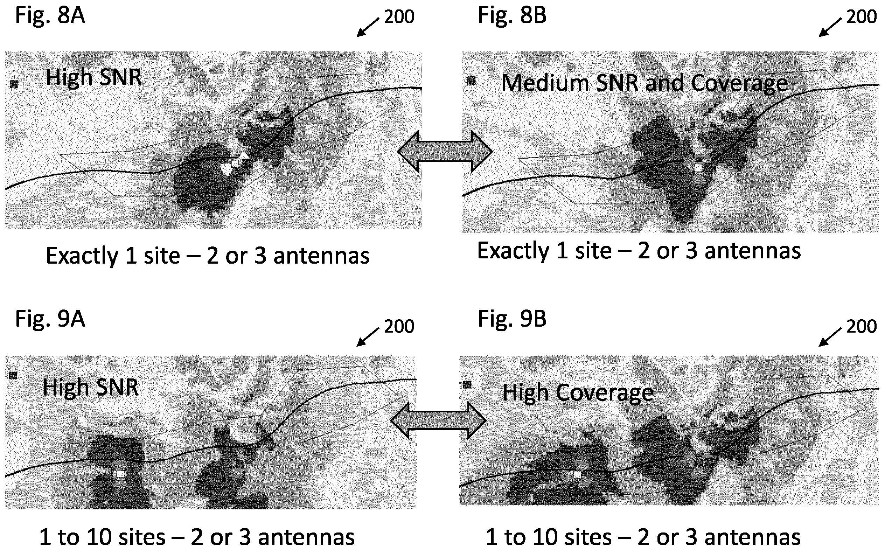

Figures 8A to 11B show optimization results for a given service area 200 obtained using a prototype system based on the sixth formulation of the QUBO and adapted for the more flexible antenna configuration as detailed above with respect to the fifth QUBO. The prototype system was configured to return a predefined number of best results obtained, for example, using different, random starting conditions. Moreover, the obtained results can be influenced by using slightly different QUBO penalties and weights and/or threshold parameters as detailed above.

Providing multiple best solutions is useful for several reasons. Among others, further decision criteria outside the optimized system performance may be considered, such as required building permits and cost, or environmental considerations. It is also possible to include such further decision criteria into the QUBO, if they can be expressed as corresponding constraints in terms of the available binary decision variables.

In each case, the specific challenge or test is indicated before the dash, e.g. to identify exactly one site, with the permissible antenna configuration identified thereafter. The text in the figure indicates how the optimization targets were achieved.

For the results shown in Figures 8A and 8B, the sixth QUBO was extended in line with the fifth QUBO to allow a selection of either two or three antennas per candidate site. Moreover, as a boundary condition, the system was configured to select exactly one candidate site. Figure 8A shows a solution providing a very high total SNR value for all covered pixels using a single site with two antennas. In contrast, Figure 8B shows a solution providing a slightly lower total SNR value, but providing a better coverage (corresponding to the number or percentage of pixels exceeding the defined reception and/or transmission strength threshold) using a single site with three antennas.

The results shown in Figures 9A and 9B have been obtained in the same way as the results shown in Figures 8A and 8B, except that the system was configured to select between 1 and 10 candidate sites. Figure 9A shows a solution providing a very high SNR using two sites with two antennas each. In contrast, Figure 9B shows a solution providing a very high coverage using two sites with three antennas each.

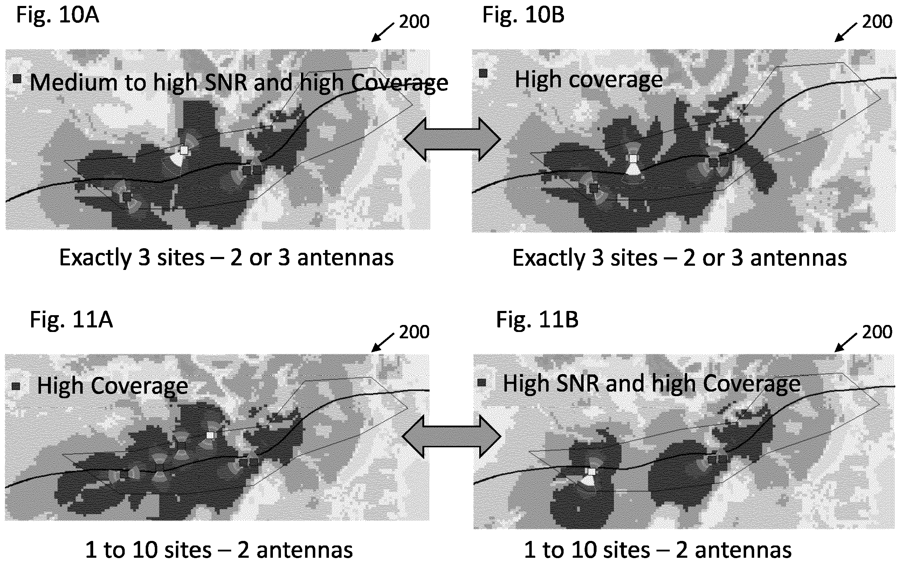

The results shown in Figures 10A and 10B have been obtained in the same way as the results shown in Figures 8A and 8B, except that the system was configured to select exactly 3 candidate sites. Figure 10A shows a solution providing a medium to high SNR and high coverage using three sites with two antennas each. In contrast, Figure 10B shows a solution providing a high coverage using a single site with three antennas and two further sites with two antennas each.

The results shown in Figures 11A and 11B have been obtained in the same way as the results shown in Figures 9A and 9B, except that the system was configured to select only two-sector antennas for each of the candidate sites. Figure 11A shows a solution providing high coverage using five sites with two antennas each. In contrast, Figure 11B shows a solution providing a high SNR and high coverage using only two sites with two antennas each.

While the results depend on the topology of the service area 200 and the various parameters influencing the optimization, it can be observed that a higher number of antennas and/or sites usually results in a better coverage. However, a smaller number of antennas, which are further spaced apart, often results in less interference and a better total SNR value. Moreover, as can be seen in Figures 8A to 10B, antennas typically are not oriented towards each other. All these results are in line with conventional planning criteria, and confirm the validity of the underlying assumptions and correctness of the developed prototype system.

List of References and Formula Symbols

| 200 | service area |
|-----|--------------|
| 300 | method |
| 310 - 350 | method steps |

| $A_0$, $A_1$, $A_2$ | antenna |
|------|---------|
| $BSA_1$, ..., $BSA_5$ | best server antenna |
| CS | candidate site |
| $B_p$ | set of candidate best servers |
| $d$ | modulo degree |
| D | set of antenna configurations |
| $N_a$ | number of antennas |
| $p$, $p_1$, ..., $p_9$ | pixel |
| P | set of pixels |
| $s$ | candidate site |
| S | set of candidate sites |

**Claims**

1. Computer-implemented method for optimizing signal reception in a cellular communications network with a plurality of antennas for communicating with terminals, the method comprising the following steps:

   - providing a set $S$ of candidate sites s and a set D of candidate antenna configurations, CAC, considered for placement of one or more antennas at the candidate sites s;
   - providing a set P of pixels p, each pixel p corresponding to a geographic location within a service area (200) for which signal reception should be optimized;
   - pre-selecting a set $B_p$ of candidate best servers, CBS, for each pixel $p$ based on an expected radio signal strength for a terminal at the geographic location corresponding to the respective pixel $p$, each set $B_p$ comprising zero or more CBS corresponding to one of the candidate sites s and one of the CAC, comprising selecting candidate servers complying with a predefined first coverage criterion for the corresponding pixel $p$ as CBS; and
   - determining a set of proposed servers, comprising:

     - providing a quadratic unconstrained binary optimization, QUBO, function comprising at least a first polynomial term $H_{SNR}$, and a second polynomial term $H_{one\_best\_server}$, the first polynomial term $H_{SNR}$ and the second polynomial term $H_{one\_best\_server}$ being expressed in terms of binary decision variables; and
     - optimizing the QUBO function using a quantum concept processor, QCP, by varying the binary decision variables to determine the set of proposed servers; wherein
     - the first polynomial term $H_{SNR}$ expresses the objective function of the QUBO indicative of an optimized aggregated signal-to-noise ratio, SNR, computed for all pixels $p$ in case all of the proposed servers of the set are built at the corresponding candidate sites s with the corresponding CAC, and
     - the second polynomial term $H_{one\_best\_server}$, is a penalty term expressing a first restriction requiring that, from each set $B_p$ of CBS, at most a single CBS should be selected and included in the set of proposed servers.

2. The method of claim 1, wherein the step of pre-selecting the set $B_p$ of CBS for each pixel $p$, comprise at least one of:

   - selecting candidate servers complying with DLR $\geq$ DLTh, wherein DLR indicates a downlink reference value for the respective candidate server, DLTh indicates a downlink threshold value;
   - selecting candidate servers complying with ULR $\geq$ ULTh, wherein ULR indicates an uplink reference value for the respective candidate server, and ULTh indicates an uplink threshold value;
   - excluding candidate servers exceeding a predefined interference criterion for at least one other pixel $p$ from the set P of pixels from the set $B_p$ of CBS; and
   - selecting at most a limited, predefined number of candidate servers as CBS for each pixel $p$.

3. The method of claim 1 or 2, wherein

   - the communication network comprises a set of pre-existing antennas, each pre-existing antenna installed at a fixed site $S_f$ and having a fixed antenna configuration;
   - the method further comprises identifying a best fixed antenna, BFA, for each pixel $p$, wherein the BFA corresponds to the antenna of the set of pre-existing antennas providing the highest expected radio signal strength at the geographic location corresponding to the respective pixel p; and
- the step of pre-selecting the set $B_p$ of CBS for each pixel *p,* comprises selecting candidate servers complying with a predefined second coverage criterion with respect to the BFA for the corresponding pixel *p* as CBS.

4. The method of claim 3, wherein only candidate servers providing a better DLR than the BFA for the corresponding pixel *p* are selected as CBS, in particular with DLR ≥ DLR_F and/or ULR ≥ ULR_F, wherein DLR indicates a downlink reference value for the respective candidate server, DLR_F indicates the downlink reference value of the BFA, ULR indicates an uplink reference value for the respective candidate server, and ULR_F indicates the uplink reference value of the BFA.

5. The method of claim 3 or 4, further comprising:

   - selecting at most one best server for each pixel p of the set P of pixels, wherein at most the BFA or one candidate server from the respective set $B_p$ of CBS complying with the second coverage criterion is selected.

6. The method of any one of claims 1 to 5, wherein the set D of CAC for a candidate site s is **characterized by** at least one of the following:

   - a number $N_a$ of antennas to be installed at the candidate site *s;*
   - a horizontal mounting angle d of at least one first antenna ($A_0$) to be installed at the candidate site *s;*
   - a vertical mounting angle of at least one antenna to be installed at the candidate site *s;* and/or
   - a mounting height of at least one antenna to be installed at the candidate site s.

7. The method of claim 6, wherein the number $N_a$ of antennas is fixed for all candidate sites s of the set *5,* in particular to $N_a$ = 3, and the horizontal mounting angle d is used to indicate an orientation $d_a$ of $N_a$ equally spaced sector antennas to be installed at the candidate site s, in particular $d_a = 360/N_a - a + d,$ with $a \in \{0, ... ,N_a - 1\}$.

8. The method of any one of claims 1 to 7, wherein the QUBO function is a Hamiltonian, and optimizing the QUBO function comprises minimizing at least the first polynomial term $H_{SNR}$ and the second polynomial term $H_{one\_best\_server}$.

9. The method of any one of claims 1 to 8, wherein

   - the QUBO function further comprises a third polynomial penalty term $H_{allowed\_degrees}$ expressing a second constraint requiring that, for each candidate site s, only a single, common antenna configuration is included in the set of proposed servers;
   - the QUBO function further comprises a fourth polynomial penalty term $H_{number\_sites}$ expressing a third constraint requiring that a predetermined number $S_{num}$ of sites and/or servers is included in the set of proposed servers; and/or
   - the QUBO function is optimizing based on an inequality requiring that the number of servers included in the set of proposed servers is bounded by at least on of an upper limit $S_{max}$ and a lower limit $S_{min}$.

10. The method of claim 8 or 9, wherein the QCP is configured to perform digital or quantum annealing using a plurality of binary decision variables, comprising:

    - a first set of binary decision variables $y_s^d$ associated with each of the candidate sites s and CAC, indicating whether at least one antenna is built at the corresponding candidate sites s in the respective CAC.

11. The method of claim 10, wherein

    - for each candidate site *s* only a first class of predefined CAC with a fixed number $N_a$ of antennas for all candidate sites s is considered, in particular equally spaced three-sector antennas ($A_0$, $A_1$, $A_3$), and the first set of binary decision variables $y_s^d$ indicating whether all $N_a$ antennas are built at the corresponding candidate site *s;* or
    - for each candidate site s one of a plurality of different classes of CAC is considered, each of the plurality of different classes corresponding to a different subset of the first set of first binary decision variables, in particular a first subset $y_{s,2}^d$ corresponding to sites with two-sector antennas and a second subset $y_{s,3}^d$ corresponding to sites with three-sector antennas.

**12.** The method of claim 10 or 11, wherein

- the communication network comprises a number of pre-existing antennas as defined in claim 3; and
- the plurality of binary decision variables further comprises a second set of binary decision variables $z_p$ associated with each of the pixels $p$ and indicating whether the corresponding pixel $p$ is served by one of the pre-existing antennas identified to represent the best fixed antenna, BFA, for the respective pixel.

**13.** The method of any one of claims 1 to 12, wherein the first polynomial term is

$$H_{\text{SNR}} = \sum_{p \in P} \sum_{(s,d) \in B_p} y_s^d \cdot \left( \sum_{(s',d') \in \overline{B}_p \cup \{(s,d)\}} \sum_{\substack{a' \in A, \ s.t. \\ (s',a') \neq \left(s, a^*_{(p,s,d)}\right)}} \text{load} \cdot \frac{\overline{\text{DLR\_W}}_{(p,s',a',d')}}{10^{\frac{\text{DLR}^*_{(p,s,d)}}{10}}} y_{s'}^{d'} + \right.$$

$$\sum_{f \in S_f} \sum_{d_f \in D_f} \text{load} \cdot \frac{\text{DLR\_W\_F}_{(p,f,d_f)}}{10^{\text{DLR}^*_{(p,s,d)}/10}} - 10^{-\text{SNRTh}/10} \left. \right) + \sum_{p \in P} z_p \cdot \sum_{(s,d) \in \overline{B}_p} \sum_{a \in A} \left( \text{load} \cdot \right.$$

$$\frac{\text{DLR\_W}_{(p,s,a,d)}}{10^{\text{DLR\_F}^*_{(p)}/10}} y_s^d + \sum_{f' \in S_f} \sum_{\substack{d_{f'} \in D_{f'}, s.t. \\ (f',d_{f'}) \neq (f^*_p, d^*_{f_p})}} \text{load} \cdot \frac{\text{DLR\_W\_F}_{(p,f',d_{f'})}}{10^{\text{DLR\_F}^*_{(p)}/10}} - 10^{-\text{SNRTh}/10} \left. \right),$$

wherein d represents one of a plurality of preconfigured horizontal mounting angles for antennas of the candidate servers, in particular the horizontal mounting angle of a first antenna ($A_0$) of a multi-sector antenna, $y_s^d$ represents a first set of binary decision variables indicating whether any antennas are built at the corresponding candidate site s with mounting angle d, $\overline{B}_p$ represents the complement of $B_p$, A represents a set of antenna numbers for each of the candidate sites, $a^*_{(p,s,d)}$ represents the antenna number of the antenna of the candidate site s with mounting angle d which provides the highest signal to the pixel, load represents the extent to which interference caused by other antennas is considered, DLR_W represents a downlink reference strength in Watt, DLR* represents the downlink reference value of the antenna of the candidate site s with mounting angle d which provides the highest signal to the pixel, $d_f \in D_f$ represents horizontal orientation of a pre-existing fixed antenna $f$, DLR_W_F represents a downlink reference value of a fixed antenna in Watt, SNRTh represents a fixed SNR threshold value, and $z_p$ represents a second set of binary decision variables associated with each of the pixels p and indicating whether the corresponding pixel $p$ is served by one of the pre-existing antennas.

**14.** A quantum concept processor, QCP, in particular a digital annealing processing unit or a quantum annealing processing unit, configured for performing at least the step of determining the set of proposed servers of the method according to any one of claims 1 to 13.

**15.** The QCP of claim 14, wherein the QCP is configured for solving an Ising model or a quadratic unconstrained binary optimization, QUBO, problem by means of quantum annealing or quantum annealing emulation.

**16.** A computer program, the computer program comprising instructions that, when the program is executed by one or more processors, cause the one or more processors to perform the method according to any one of claims 1 to 13.

**Patentansprüche**

**1.** Computerimplementiertes Verfahren zur Optimierung des Signalempfangs in einem Mobiltelefon-Kommunikationsnetz mit einer Vielzahl von Antennen zur Kommunikation mit Endgeräten, wobei das Verfahren die folgenden Schritte umfasst:

- Bereitstellung einer Menge $S$ von Kandidatenstandorten s und einer Menge $D$ von Kandidatenantennenkonfigurationen, CAC, die für die Platzierung einer oder mehrerer Antennen an den Kandidatenstandorten $s$ in Betracht kommen;

- Bereitstellung eines Satzes $P$ von Pixeln $p$, wobei jedes Pixel $p$ einem geografischen Ort innerhalb eines Dienstbereichs (200) entspricht, für den der Signalempfang optimiert werden soll;

- Vorauswahl eines Satzes $B_p$ von besten Serverkandidaten, CBS, für jedes Pixel $p$ auf der Grundlage einer erwarteten Funksignalstärke für ein Endgerät an dem geografischen Ort, der dem jeweiligen Pixel $p$ entspricht, wobei jeder Satz $B_p$ null oder mehr CBS umfasst, die einem der Kandidatenstandorte s und einem der CAC entsprechen, umfassend das Auswählen von Kandidaten-Servern, die ein vordefiniertes erstes Abdeckungskriterium für das entsprechende Pixel $p$ als CBS erfüllen; und

- Bestimmung einer Gruppe von vorgeschlagenen Servern, die umfasst:

    - Bereitstellen einer quadratischen, uneingeschränkten, binären Optimierungsfunktion (QUBO) mit mindestens einem ersten Polynomterm $H_{SNR}$ und einem zweiten Polynomterm $H_{one\_best\_server}$, wobei der erste Polynomterm $H_{SNR}$ und der zweite Polynomterm $H_{one\_best\_server}$ in Form von binären Entscheidungsvariablen ausgedrückt werden; und

    - Optimieren der QUBO-Funktion unter Verwendung eines Quantenkonzeptprozessors, QCP, durch Variieren der binären Entscheidungsvariablen, um den Satz der vorgeschlagenen Server zu bestimmen; wobei

    - der erste Polynomterm $H_{SNR}$ drückt die Zielfunktion des QUBO aus, die ein optimiertes aggregiertes Signal-RauschVerhältnis, SNR, angibt, das für alle Pixel $p$ berechnet wird, falls alle vorgeschlagenen Server des Satzes an den entsprechenden Kandidatenstandorten s mit dem entsprechenden CAC aufgebaut werden, und

    - der zweite Polynomterm $H_{one\_best\_server}$ ist ein Strafterm, der eine erste Restriktion ausdrückt, die besagt, dass aus jeder Menge $B_p$ von CBS höchstens ein einziger CBS ausgewählt und in die Menge der vorgeschlagenen Server aufgenommen werden sollte.

2. Verfahren nach Anspruch 1, wobei der Schritt der Vorauswahl des Satzes $B_p$ von CBS für jedes Pixel $p$ mindestens einen der folgenden Schritte umfasst:

    - Auswahl von Serverkandidaten, die DLR $\geq$ DLTh erfüllen, wobei DLR einen Downlink-Referenzwert für den jeweiligen Serverkandidaten und DLTh einen Downlink-Schwellenwert angibt;

    - Auswahl von Kandidaten-Servern, die ULR $\geq$ ULTh erfüllen, wobei ULR einen Uplink-Referenzwert für den jeweiligen KandidatenServer und ULTh einen Uplink-Schwellenwert angibt;

    - Ausschluss von Serverkandidaten, die ein vordefiniertes Interferenzkriterium für mindestens ein anderes Pixel $p$ aus der Menge P von Pixeln aus der Menge $B_p$ von CBS überschreiten; und

    - Auswahl einer begrenzten, vorab festgelegten Anzahl von Serverkandidaten als CBS für jedes Pixel $p$.

3. Das Verfahren nach Anspruch 1 oder 2, wobei

    - das Kommunikationsnetz umfasst eine Reihe bereits vorhandener Antennen, wobei jede bereits vorhandene Antenne an einem festen Standort $s_f$ installiert ist und eine feste Antennenkonfiguration aufweist;

    - das Verfahren ferner das Identifizieren einer besten festen Antenne, BFA, für jedes Pixel p umfasst, wobei die BFA der Antenne aus dem Satz bereits vorhandener Antennen entspricht, die die höchste erwartete Funksignalstärke an dem geografischen Ort liefert, der dem jeweiligen Pixel $p$ entspricht; und

    - der Schritt der Vorauswahl der Menge $B_p$ von CBS für jedes Pixel $p$ die Auswahl von Kandidaten-Servern umfasst, die ein vordefiniertes zweites Abdeckungskriterium in Bezug auf die BFA für das entsprechende Pixel $p$ als CBS erfüllen.

4. Verfahren nach Anspruch 3, wobei nur Kandidatenserver, die einen besseren DLR-Wert als der BFA für das entsprechende Pixel $p$ liefern, als CBS ausgewählt werden, insbesondere mit DLR $\geq$ DLR_F und/oder ULR $\geq$ ULR_F, wobei DLR einen Downlink-Referenzwert für den jeweiligen Kandidatenserver angibt, DLR_F den Downlink-Referenzwert des BFA angibt, ULR einen Uplink-Referenzwert für den jeweiligen Kandidatenserver angibt und ULR_F den Uplink-Referenzwert des BFA angibt.

5. Das Verfahren nach Anspruch 3 oder 4 umfassend ferner:

    - Auswahl höchstens eines besten Servers für jedes Pixel p der Menge P von Pixeln, wobei höchstens der BFA oder ein Kandidatenserver aus der jeweiligen Menge $B_p$ von CBS ausgewählt wird, der das zweite Abdeckungskriterium erfüllt.

6.  Verfahren nach einem der Ansprüche 1 bis 5, wobei die Menge $D$ von CAC für einen Kandidatenstandort $s$ durch mindestens eines der folgenden Merkmale gekennzeichnet ist:

    - eine Anzahl $N_a$ von Antennen, die an dem Kandidatenstandort s installiert werden sollen;
    - einen horizontalen Montagewinkel $d$ mindestens einer ersten Antenne ($A_0$), die am Kandidatenstandort $s$ installiert werden soll;
    - einen vertikalen Montagewinkel mindestens einer Antenne, die am Kandidatenstandort s installiert werden soll; und/oder
    - eine Montagehöhe von mindestens einer Antenne, die an dem Bewerberstandort installiert werden soll.

7.  Verfahren nach Anspruch 6, wobei die Anzahl $N_a$ der Antennen für alle in Frage kommenden Standorte s der Menge $S$ festgelegt wird, insbesondere auf $N_a = 3$, und der horizontale Montagewinkel d verwendet wird, um eine Ausrichtung $d_a$ von $N_a$ gleichmäßig beabstandeten Sektorantennen anzugeben, die an dem in Frage kommenden Standort s zu installieren sind, insbesondere $d_a = 360/N_a \cdot a + d$, mit $a \in \{0, ... , N_a-1\}$.

8.  Verfahren nach einem der Ansprüche 1 bis 7, wobei die QUBO-Funktion eine Hamilton-Funktion ist, und die Optimierung der QUBO-Funktion die Minimierung mindestens des ersten Polynomterms $H_{SNR}$ und des zweiten Polynomterms $H_{one\_best\_server}$ umfasst.

9.  Das Verfahren nach einem der Ansprüche 1 bis 8, wobei

    - die QUBO-Funktion umfasst außerdem einen dritten polynomischen Strafterm $H_{allowed\_degrees}$, der eine zweite Einschränkung ausdrückt, die verlangt, dass für jeden Kandidatenstandort s nur eine einzige gemeinsame Antennenkonfiguration in die Menge der vorgeschlagenen Server aufgenommen wird;
    - die QUBO-Funktion ferner einen vierten polynomischen Strafterm $H_{number\_sites}$ umfasst, der eine dritte Einschränkung ausdrückt, die verlangt, dass eine vorbestimmte Anzahl $S_{num}$ von Sites und/oder Servern in der Menge der vorgeschlagenen Server enthalten ist; und/oder
    - die QUBO-Funktion optimiert auf der Grundlage einer Ungleichung, die verlangt, dass die Anzahl der Server, die in der Menge der vorgeschlagenen Server enthalten sind, mindestens durch eine Obergrenze $S_{max}$ und eine Untergrenze $S_{min}$ begrenzt ist.

10. Verfahren nach Anspruch 8 oder 9, wobei das QCP so konfiguriert ist, dass es digitales oder Quantenglühen unter Verwendung einer Vielzahl von binären Entscheidungsvariablen durchführt, umfassend:

    - ein erster Satz binärer Entscheidungsvariablen $y_s^d$ die mit jedem der Kandidatenstandorte s und CAC verbunden sind und angeben, ob mindestens eine Antenne an den entsprechenden Kandidatenstandorten s in den jeweiligen CAC gebaut wird.

11. Das Verfahren nach Anspruch 10, wobei

    - für jeden Standortkandidaten s wird nur eine erste Klasse von vordefinierten CAC mit einer festen Anzahl $N_a$ von Antennen für alle Standortkandidaten s berücksichtigt, insbesondere gleichmäßig verteilte Drei-Sektor-Antennen (Ao, $A_1$, $A_3$), und der erste Satz von binären Entscheidungsvariablen $y_s^d$ die angeben, ob alle $N_a$ Antennen an dem entsprechenden Kandidatenstandort s gebaut werden; oder
    - für jeden Standortkandidaten s wird eine von mehreren verschiedenen CAC-Klassen berücksichtigt, wobei jede der mehreren verschiedenen Klassen einer anderen Teilmenge des ersten Satzes von ersten binären Entscheidungsvariablen entspricht, insbesondere einer ersten Teilmenge $y_{s,2}^d$ die Standorten mit Zwei-Sektoren-Antennen entspricht, und eine zweite Teilmenge $y_{s,3}^d$ die Standorten mit Drei-Sektoren-Antennen entspricht.

12. Das Verfahren nach Anspruch 10 oder 11, wobei

    - das Kommunikationsnetz eine Anzahl bereits vorhandener Antennen gemäß Anspruch 3 umfasst; und
    - die Vielzahl der binären Entscheidungsvariablen ferner einen zweiten Satz binärer Entscheidungsvariablen

umfasst $z_p$ der jedem der Pixel p zugeordnet ist und anzeigt, ob das entsprechende Pixel p von einer der bereits vorhandenen Antennen bedient wird, die als die beste feste Antenne, BFA, für das jeweilige Pixel identifiziert wurde.

13. Verfahren nach einem der Ansprüche 1 bis 12, wobei der erste Polynomterm

$$H_{\text{SNR}} = \sum_{p \in P} \sum_{(s,d) \in B_p} y_s^d \cdot \left( \sum_{(s',d') \in \overline{B}_p \cup \{(s,d)\}} \sum_{\substack{a' \in A, \ s.t. \\ (s',a') \neq \left(s, a^*_{(p,s,d)}\right)}} \text{load} \cdot \frac{\frac{\text{DLR\_W}_{(p,s',a',d')}}{\text{DLR}^*_{(p,s,d)}}}{10^{\frac{\text{DLR}^*_{(p,s,d)}}{10}}} \ y_{s'}^{d'} + \right.$$

$$\sum_{f \in S_f} \sum_{d_f \in D_f} \text{load} \cdot \frac{\text{DLR\_W\_F}_{(p,f,d_f)}}{10^{\text{DLR}^*_{(p,s,d)}/10}} - 10^{-\text{SNRTh}/10} \left. \right) + \sum_{p \in P} z_p \cdot \sum_{(s,d) \in \overline{B}_p} \sum_{a \in A} \left( load \cdot \frac{\text{DLR\_W}_{(p,s,a,d)}}{10^{\text{DLR\_F}^*_{(p)}/10}} y_s^d + \right.$$

$$\sum_{f' \in S_f} \sum_{\substack{d_{f'} \in D_{f'}, s.t. \\ (f',d_{f'}) \neq (f^*_p, d^*_{f_p})}} \text{load} \cdot \frac{\text{DLR\_W\_F}_{(p,f',d_{f'})}}{10^{\text{DLR\_F}^*_{(p)}/10}} - 10^{-\text{SNRTh}/10} \left. \right) \ ,$$

ist, wobei d einen von mehreren vorkonfigurierten horizontalen Montagewinkeln für Antennen der Kandidatenserver darstellt, insbesondere den horizontalen Montagewinkel einer ersten Antenne (A$_0$) einer Multisektorantenne, $y_s^d$ einen ersten Satz binärer Entscheidungsvariablen darstellt, die angeben, ob an dem entsprechenden Kandidatenstandort s irgendwelche Antennen mit dem Montagewinkel d gebaut werden $\overline{B}_p$ steht für das Komplement von $B_p$ A steht für einen Satz von Antennennummern für jeden der Kandidatenstandorte, $a^*_{(p,s,d)}$ steht für die Antennennummer der Antenne des Kandidatenstandorts s mit dem Montagewinkel d, die das höchste Signal für den Bildpunkt liefert, load steht für das Ausmaß, in dem durch andere Antennen verursachte Störungen berücksichtigt werden, DLR_W steht für eine Downlink-Referenzstärke in Watt, DLR* steht für den Downlink-Referenzwert der Antenne des Kandidatenstandorts s mit dem Montagewinkel d, die das höchste Signal für den Bildpunkt liefert, $d_f \in D_f$ für die horizontale Ausrichtung einer bereits vorhandenen festen Antenne $f$ steht, DLR W F für einen Downlink-Referenzwert einer festen Antenne in Watt steht, SNRTh für einen festen SNR-Schwellenwert steht, und $z_p$ einen zweiten Satz von binären Entscheidungsvariablen darstellt, die mit jedem der Pixel $p$ verbunden sind und anzeigen, ob das entsprechende Pixel $p$ von einer der bereits vorhandenen Antennen versorgt wird.

14. Quantenkonzeptprozessor, QCP, insbesondere eine Digital-Annealing-Verarbeitungseinheit oder eine Quanten-Annealing-Verarbeitungseinheit, , der so konfiguriert ist, dass er zumindest den Schritt der Bestimmung der Menge der vorgeschlagenen Server des Verfahrens nach einem der Ansprüche 1 bis 13 durchführt.

15. QCP nach Anspruch 14, wobei das QCP so konfiguriert ist, dass es ein Ising-Modell oder ein quadratisches unbeschränktes binäres Optimierungsproblem (QUBO) mittels Quantenglühen oder Quantenglüh-Emulation löst.

16. Computerprogramm, wobei das Computerprogramm Anweisungen umfasst, die, wenn das Programm von einem oder mehreren Prozessoren ausgeführt wird, den einen oder die mehreren Prozessoren veranlassen, das Verfahren nach einem der Ansprüche 1 bis 13 durchzuführen.


**Revendications**

1. Procédé mis en œuvre par ordinateur pour optimiser la réception des signaux dans un réseau de communications cellulaires avec une pluralité d'antennes pour communiquer avec des terminaux, le procédé comprenant les étapes suivantes :

- fournir un ensemble *S* de sites candidats s et un ensemble *D* de configurations d'antennes candidates, CAC, envisagées pour le placement d'une ou plusieurs antennes sur les sites candidats s
- fournir un ensemble P de pixels *p,* chaque pixel *p* correspondant à un emplacement géographique dans une zone de service (200) pour laquelle la réception du signal doit être optimisée ;
- présélectionner un ensemble $B_p$ de meilleurs serveurs candidats, CBS, pour chaque pixel *p* en fonction de la puissance attendue du signal radio d'un terminal à l'emplacement géographique correspondant au pixel $p$ respectif, chaque ensemble $B_p$ comprenant zéro ou plusieurs CBS correspondant à l'un des *sites* candidats et à l'un des CAC, comprenant la sélection de serveurs candidats conformes à un premier critère de couverture prédéfini pour le pixel $p$ correspondant en tant que CBS ; et
- déterminer un ensemble de serveurs proposés, comprenant :

- fournir une fonction d'optimisation binaire quadratique sans contrainte, QUBO, comprenant au moins un premier terme polynomial $H_{SNR}$ et un second terme polynomial $H_{one\_best\_server}$, le premier terme polynomial $H_{SNR}$ et le second terme polynomial $H_{one\_best\_server}$ étant exprimés en termes de variables de décision binaires ; et
- optimiser la fonction QUBO à l'aide d'un processeur conceptuel quantique, QCP, en faisant varier les variables de décision binaires pour déterminer l'ensemble des serveurs proposés ; dans lequel
- le premier terme polynomial $H_{SNR}$ exprime la fonction objective de la QUBO indiquant un rapport signal/bruit, SNR, agrégé optimisé calculé pour tous les pixels $p$ dans le cas où tous les serveurs proposés de l'ensemble sont construits sur les sites candidats s correspondants avec le CAC correspondant, et
- le second terme polynomial $H_{one\_best\_server}$ est un terme de pénalité exprimant une première restriction exigeant que, dans chaque ensemble $B_p$ de CBS, au plus un seul CBS soit sélectionné et inclus dans l'ensemble des serveurs proposés.

2. Le procédé de la revendication 1, dans lequel l'étape de présélection de l'ensemble $B_p$ de CBS pour chaque pixel $p$, comprend au moins l'un des suivants :

- sélection de serveurs candidats conformes à DLR ≥ DLTh, DLR indiquant une valeur de référence sur la liaison descendante pour le serveur candidat respectif, DLTh indiquant une valeur seuil sur la liaison descendante ;
- sélection des serveurs candidats conformes à ULR ≥ ULTh, ULR indiquant une valeur de référence de liaison montante pour le serveur candidat concerné, et ULTh indiquant une valeur seuil de liaison montante ;
- exclure les serveurs candidats qui dépassent un critère d'interférence prédéfini pour au moins un autre pixel p de l'ensemble P de pixels de l'ensemble $B_p$ de CBS ; et
- sélectionner au maximum un nombre limité et prédéfini de serveurs candidats en tant que CBS pour chaque pixel p.

3. Le procédé de la revendication 1 ou 2, dans lequel

- le réseau de communication comprend un ensemble d'antennes préexistantes, chaque antenne préexistante étant installée sur un site fixe $S_f$ et ayant une configuration d'antenne fixe ;
- le procédé comprend en outre l'identification d'une meilleure antenne fixe, BFA, pour chaque pixel $p$, dans laquelle la BFA correspond à l'antenne de l'ensemble des antennes préexistantes fournissant la force de signal radio la plus élevée attendue à l'emplacement géographique correspondant au pixel $p$ respectif ; et
- l'étape de présélection de l'ensemble $B_p$ de CBS pour chaque pixel $p$ consiste à sélectionner comme CBS les serveurs candidats qui satisfont à un deuxième critère de couverture prédéfini par rapport à la BFA pour le pixel $p$ correspondant.

4. Le procédé de la revendication 3, dans lequel seuls les serveurs candidats fournissant un meilleur DLR que le BFA pour le pixel $p$ correspondant sont sélectionnés comme CBS, en particulier avec DLR ≥ DLR_F et/ou ULR ≥ ULR_F, DLR indiquant une valeur de référence de liaison descendante pour le serveur candidat respectif, DLR_F indiquant la valeur de référence de liaison descendante du BFA, ULR indiquant une valeur de référence de liaison montante pour le serveur candidat respectif, et ULR_F indiquant la valeur de référence de liaison montante du BFA.

5. Le procédé de la revendication 3 ou 4, comprenant en outre :

- sélectionner au maximum un meilleur serveur pour chaque pixel p de l'ensemble P de pixels, en sélectionnant au maximum le BFA ou un serveur candidat de l'ensemble respectif $B_p$ de CBS conforme au deuxième critère de couverture.

6. Le procédé de l'une des revendications 1 à 5, dans lequel l'ensemble $D$ de CAC pour un site candidat $s$ est **caractérisé par** au moins l'un des éléments suivants :

- un nombre $N_a$ d'antennes à installer sur le site candidat $s$ ;

- un angle de montage horizontal $d$ d'au moins une première antenne ($A_0$) à installer sur le site candidat $s$ ;
- un angle de montage vertical d'au moins une antenne à installer sur le site candidat ; et/ou
- une hauteur de montage d'au moins une antenne à installer sur le site du candidat $s$.

**7.** Le procédé selon la revendication 6, dans lequel le nombre $N_a$ d'antennes est fixé pour tous les sites candidats $s$ de l'ensemble $S$, en particulier à $N_a$ = 3, et l'angle de montage horizontal $d$ est utilisé pour indiquer une orientation $d_a$ de $N_a$ antennes sectorielles équidistantes à installer sur le site candidat s, en particulier = 360/$N_a$ · $a$ + $d$, avec $a \in \{0, ... , N_a$ -1\}.

**8.** Le procédé de l'une des revendications 1 à 7, dans lequel la fonction QUBO est un hamiltonien, et optimiser la fonction QUBO comprend la minimisation d'au moins le premier terme polynomial $H_{SNR}$ et le second terme polynomial $H_{one\_best\_server}$.

**9.** Le procédé de l'une des revendications 1 à 8, dans lequel

- la fonction QUBO comprend en outre un troisième terme de pénalité polynomiale, $H_{allowed\_degrees}$, qui exprime une deuxième contrainte exigeant que, pour chaque site candidat $s$, une seule configuration d'antenne commune soit incluse dans l'ensemble des serveurs proposés ;
- la fonction QUBO comprend en outre un quatrième terme polynomial de pénalité $H_{number\_sites}$ exprimant une troisième contrainte exigeant qu'un nombre prédéterminé $S_{num}$ de sites et/ou de serveurs soit inclus dans l'ensemble des serveurs proposés ; et/ou
- la fonction QUBO est optimisant sur la base d'une inégalité exigeant que le nombre de serveurs inclus dans l'ensemble des serveurs proposés soit limité par au moins l'une d'une limite supérieure $S_{max}$ et d'une limite inférieure $S_{min}$.

**10.** Le procédé de la revendication 8 ou 9, dans lequel le QCP est configuré pour effectuer un recuit numérique ou quantique à l'aide d'une pluralité de variables de décision binaires, comprenant :

- un premier ensemble de variables de décision binaires $y_s^d$ associé à chacun des sites candidats $s$ et CAC, indiquant si au moins une antenne est construite sur les sites candidats $s$ correspondants dans le CAC respectif.

**11.** Le procédé de la revendication 10, dans lequel

- pour chaque site candidat $s$, seule une première classe de CAC prédéfinis avec un nombre fixe $N_a$ d'antennes pour tous les sites candidats $s$ *est* prise en considération, en particulier des antennes à trois secteurs également espacés ($A_0$, $A_1$, $A_3$ ), et le premier ensemble de variables de décision binaires $y_s^d$ indiquant si toutes les $N_a$ antennes sont construites sur le site candidat s correspondant ; ou
- pour chaque site candidat, on considère une classe de CAC parmi plusieurs, chacune de ces classes correspondant à un sous-ensemble différent du premier ensemble de variables de décision binaires, en particulier un premier sous-ensemble correspondant aux sites dotés d'antennes à deux secteurs et un second sous-ensemble correspondant aux sites dotés d'antennes à deux secteurs, et un troisième sous-ensemble correspondant aux sites dotés d'antennes à deux secteurs $y_{s,2}^d$ correspondant aux sites dotés d'antennes à deux secteurs et un second sous-ensemble $y_{s,3}^d$ correspondant aux sites dotés d'antennes à trois secteurs.

**12.** Le procédé de la revendication 10 ou 11, dans lequel

- le réseau de communication comprend un certain nombre d'antennes préexistantes telles que définies dans la revendication 3 ; et
- la pluralité de variables de décision binaires comprend en outre un deuxième ensemble de variables de décision binaires $z_p$ associé à chacun des pixels $p$ et indiquant si le pixel $p$ correspondant est desservi par l'une des antennes préexistantes identifiées comme représentant la meilleure antenne fixe, BFA, pour le pixel respectif.

**13.** Procédé de l'une des revendications 1 à 12, dans lequel le premier terme polynomial est

$$H_{\text{SNR}} = \sum_{p \in P} \sum_{(s,d) \in B_p} y_s^d \cdot \left( \sum_{(s',d') \in \overline{B}_p \cup \{(s,d)\}} \sum_{\substack{a' \in A,\ s.t. \\ (s',a') \neq (s, a^*_{(p,s,d)})}} \texttt{load} \cdot \frac{\text{DLR\_W}_{(p,s',a',d')}}{10^{\frac{\text{DLR}^*_{(p,s,d)}}{10}}} y_{s'}^{d'} + \right.$$

$$\sum_{f \in S_f} \sum_{d_f \in D_f} \texttt{load} \cdot \frac{\text{DLR\_W\_F}_{(p,f,d_f)}}{10^{\text{DLR}^*_{(p,s,d)}/10}} - 10^{-\text{SNRTh}/10} \Bigg) + \sum_{p \in P} z_p \cdot \sum_{(s,d) \in \overline{B}_p} \sum_{a \in A} \left( \texttt{load} \cdot \frac{\text{DLR\_W}_{(p,s,a,d)}}{10^{\text{DLR\_F}^*_{(p)}/10}} y_s^d + \right.$$

$$\sum_{f' \in S_f} \sum_{\substack{d_{f'} \in D_{f'},\ s.t. \\ (f', d_{f'}) \neq (f^*_p, d^*_{f_p})}} \texttt{load} \cdot \frac{\text{DLR\_W\_F}_{(p,f',d_{f'})}}{10^{\text{DLR\_F}^*_{(p)}/10}} - 10^{-\text{SNRTh}/10} \Bigg),$$

où d représente l'un des angles de montage horizontal préconfigurés pour les antennes des serveurs candidats, en particulier l'angle de montage horizontal d'une première antenne ($A_0$) d'une antenne multisectorielle, $y_s^d$ représente un premier ensemble de variables de décision binaires indiquant si des antennes sont construites sur le site candidat correspondant *s* avec l'angle de montage *d*, $B_p$ représente le complément de $B_p$, A représente un ensemble de numéros d'antenne pour chacun des sites candidats, $a^*_{(p,s,d)}$ représente le numéro de l'antenne du site candidat s avec l'angle de montage d qui fournit le signal le plus élevé au pixel, load représente la mesure dans laquelle les interférences causées par d'autres antennes sont prises en compte, DLR_W représente une puissance de référence en liaison descendante en watts, DLR* représente la valeur de référence en liaison descendante de l'antenne du site candidat s avec l'angle de montage d qui fournit le signal le plus élevé au pixel, $d_f \in D_f$ représente l'orientation horizontale d'une antenne fixe préexistante *f*, DLR_W_F représente une valeur de référence de la liaison descendante d'une antenne fixe en watts, SNRTh représente une valeur seuil SNR fixe, et $z_p$ représente un deuxième ensemble de variables de décision binaires associées à chacun des pixels *p* et indiquant si le pixel *p* correspondant est desservi par l'une des antennes préexistantes.

**14.** Processeur de concept quantique, QCP, en particulier une unité de traitement de recuit numérique ou une unité de traitement de recuit quantique, configuré pour exécuter au moins l'étape de détermination de l'ensemble des serveurs proposés dans le cadre du procédé selon l'une des revendications 1 à 13.

**15.** Le QCP de la revendication 14, dans lequel le QCP est configuré pour résoudre un modèle Ising ou un problème d'optimisation binaire quadratique sans contrainte (QUBO) au moyen d'un recuit quantique ou d'une émulation de recuit quantique.

**16.** Programme d'ordinateur comprenant des instructions qui, lorsque le programme est exécuté par un ou plusieurs processeurs, amènent le ou les processeurs à exécuter le procédé selon l'une des revendications 1 à 13.

## Fig. 1

## Fig. 2

$$B_p \subset S \times D$$

Fig. 3

Fig. 4

Fig. 5A

Fig. 5B

Fig. 6

300

| Provide a set *S* of candidate sites *s* | 310 |

| Provide a set *D* of candidate antenna configurations (CAC) | 320 |

| Provide a set *P* of pixels *p* | 330 |

| Select a set $B_p$ of candidate best servers (CBS) for each pixel *p* | 340 |

| Determine a set of proposed servers to be built | 350 |

Fig. 7A

Build main and test
specific cost function

K-1
times

Optimize with
Simulated Annealing
(Evaluation of complete values of
cost function in **every iteration**)

Fig. 7B

Build (main) QUBO
class instance based on
partial values of cost function

Add test specific
constraints / targets

K-1
times

Optimize **fast** with
**Digital Annealing**
(No further evaluation of cost
function necessary)

Fig. 8A

High SNR

Exactly 1 site – 2 or 3 antennas

Fig. 8B

Medium SNR and Coverage

Exactly 1 site – 2 or 3 antennas

Fig. 9A

High SNR

1 to 10 sites – 2 or 3 antennas

Fig. 9B

High Coverage

1 to 10 sites – 2 or 3 antennas

EP 4 362 525 B1

Fig. 10A

Medium to high SNR and high Coverage

Exactly 3 sites – 2 or 3 antennas

Fig. 10B

High coverage

Exactly 3 sites – 2 or 3 antennas

Fig. 11A

High Coverage

1 to 10 sites – 2 antennas

Fig. 11B

High SNR and high Coverage

1 to 10 sites – 2 antennas

EP 4 362 525 B1

**EP 4 362 525 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113766518 A
- US 2005097161 A1
- US 6470195 B1

**Non-patent literature cited in the description**

- *3GPP TR 36.942*